# EUROPEAN PATENT SPECIFICATION

(11) **EP 2 297 921 B1**
(45) Date of publication and mention of the grant of the patent: **24.02.2021**
(21) Application number: 09790203.5
(22) Date of filing: 09.07.2009
(51) Int. Cl.: H04L 29/06, H04L 29/08, H04L 29/12

(54) **NETWORK STORAGE**
NETZWERKSPEICHERUNG
STOCKAGE EN RÉSEAU

(30) Priority: 10.07.2008 US 170769; 10.07.2008 US 170787; 10.07.2008 US 170624
(43) Date of publication of application: 23.03.2011
(73) Proprietor: Juniper Networks, Inc., Sunnyvale, CA 94089 (US)
(72) Inventor: CARVER, David, C., Lexington MA 02421 (US); GEROVAC, Branko, J., Lexington MA 02421 (US)
(74) Representative: D Young & Co LLP
(86) International application number: PCT/US2009/050057
(87) International publication number: WO 2010/006132

(56) References cited:
- US-A1- 2003 229 689
- US-A1- 2004 039 756
- US-A1- 2006 190 552
- US-A1- 2006 272 015
- US-A1- 2006 274 787
- Ulf Troppens: "STORAGE NETWORKS EXPLAINED" In: "STORAGE NETWORKS EXPLAINED", 1 January 2004 (2004-01-01), John Wiley and Sons., England, XP055343679, ISBN: 978-0-470-86182-0 pages 354-372,
- Andrew S Tanenbaum: "COMPUTER NETWORKS" In: "COMPUTER NETWORKS", 1 January 2003 (2003-01-01), Pearson Education International, Upper Saddle River, NJ 031549, XP055343569, ISBN: 978-0-13-038488-1 pages 869-891,
- Andrew S Tanenbaum: "COMPUTER NETWORKS. 4th edition.", , 1 January 2004 (2004-01-01), pages 444-556, XP055603667, Retrieved from the Internet: URL:https://www.academia.edu/.../Andrew_S. _Tanenbaum_computer_networks_4th_edition [retrieved on 2019-07-09]

## Description

### Background

This specification relates to network storage.

Distributed data storage systems are used today in a variety of configurations. For example, a storage area network (SAN) is used to couple one or more server computers with one or more storage devices. In some cases, an Internet SCSI (iSCSI) protocol is used in which each server has an initiator, which provides a local interface to remote storage units at target storage devices. The servers can effectively use the remote storage as if it were local to those servers.

Other distributed storage systems, such as the Amazon S3 system, make use of Web- based protocols to provide storage services to remote clients. For example, a user can read, write, or delete files stored in a remote Internet accessible storage system.

In such distributed storage systems, the access requests made by a client of the system may be abstracted such that physical arrangements of data on storage devices, such as disks and the use of buffers is hidden from the user, is not visible to the client.

US 2006/0190552 discloses a data retention system having a plurality of access protocols. The system comprises a memory store accessible through a virtual address space, a controller communicatively coupled to the memory store, and an interface. The controller is adapted to implement a memory access protocol for accessing at least a first portion of the virtual address space and a secondary storage protocol for accessing at least a second portion of the virtual address space.

US 2006/0272015 A1 relates to a virtual device and virtual bus tunnels, modules and methods.

US 2003/0229689 A1 relates to a method and a system for managing stored data on a computer network.

XP055603667 by Andrew S. Tanenbaum, copyright notice 2003, relates to computer networks (fourth edition).

US 2006/274787 A1 relates to an adaptive cache design for MPT/MTT tables and TCP context.

### Summary

The invention is defined in the appended claims.

In general, in one aspect, the invention features a computer-implemented method that includes receiving a data transfer request that includes a specification of an access operation to be executed in association with one or more network-based storage resource elements, wherein the specification includes respective persistent fully-resolvable identifiers for the one or more network-based storage resource elements, and processing the access operation in accordance with its specification to effect a data transfer between nodes on a data network.

Aspects of the invention may include one or more of the following features.

The data transfer request may be received from a first node on the data network and the processing of the access operation affects a data transfer between the first node and a second node on the data network.

The first node may manage a first set of network-based storage resource elements, one of which is associated with a first persistent fully-resolvable identifier provided in the specification, and the second node may manage a second set of network-based storage resource elements, one of which is associated with a second persistent fully-resolvable identifier provided in the specification.

The element of the first set, which is associated with the first persistent fully-resolvable identifier, may represent a data source of the data transfer request, and the element of the second set, which is associated with the second persistent fully-resolvable identifier, may represent a data destination of the data transfer request.

The element of the first set, which is associated with the first persistent fully-resolvable identifier, may represent a data destination of the data transfer request; and the element of the second set, which is associated with the second persistent fully-resolvable identifier, may represent a data source of the data transfer request.

The data transfer request may be received from a first node on the data network and the processing of the access operation effects a data transfer between a second node and a third node on the data network.

The data transfer request may be received by the second node on the data network.

The data transfer request may be received by a fourth node on the data network.

The second node may manage a first set of network-based storage resource elements, one of which is associated with a first persistent fully-resolvable identifier provided in the specification, and the third node may manage a second set of network-based storage resource elements, one of which is associated with a second persistent fully-resolvable identifier provided in the specification.

The specification of the access operation may include a data transfer request type that comprises one of the following: a READ request type, a WRITE request type, a MOVE request type.

The specification of the access operation may further include information that specifies a synchronous or asynchronous nature of the access operation to be executed.

The specification of the access operation may further include information that specifies a time-based period within which the data transfer is to be affected.

The specification of the access operation may further include information that specifies a time-based period within which the access operation is to be executed.

The specification of the access operation may further include information that uniquely identifies a session context within which the access operation is to be executed.

The specification of the access operation may further include information that indicates that the received data transfer request is a last of a set of session-specific data transfer requests.

The specification of the access operation may further include information to prompt a confirmation to be generated upon completion of the data transfer.

The specification of the access operation may further include information to prompt a status update to be generated upon satisfaction of a condition of an event.

Each persistent fully-resolvable identifier for a network-based storage resource element is comprised of a uniform resource identifier (URI).

The data transfer request may be specified in accordance with HTTP syntax or an extension thereof.

In general, in another aspect, the invention features a system that includes nodes on a data network, storage resources that are managed by one or more nodes on the data network, wherein each element of a storage resource is uniquely addressable by a persistent fully-resolvable identifier within the system, and a machine-readable medium that stores executable instructions to cause a machine to receive a data transfer request that includes a specification of an access operation to be executed in association with one or more network-based storage resource elements, wherein the specification includes respective persistent fully-resolvable identifiers for the one or more network-based storage resource elements, and process the access operation in accordance with its specification to effect a data transfer between nodes on a data network.

Each addressable element of a first storage resource may be associated with a name that conforms to a direct addressing scheme that specifies a physical location on the first storage resource.

Each element of a first storage resource may be associated with a name that conforms to an abstract addressing scheme that specifies a logical unit number of the first storage resource.

Each element of a first storage resource may be associated with a name that conforms to an addressing scheme that uses a combination of direct and abstract addressing.

Elements of a first storage resource may be associated with names that conform to a first addressing scheme, and elements of a second storage resource may be associated with names that conform to a second, different addressing scheme.

Aspects can have one or more of the following advantages.

A uniform naming approach, for example based on URI syntax, simplifies coordination of data transfers. For example, session based naming is not required so session-related information is not needed to resolve what storage locations are referenced by a transfer request.

Use of a web-based protocol that allows specification of underlying storage locations, for example based on physical layout of data on storage devices, provides a degree of control to select desired storage characteristics. For example, data may be selective stored on different portions of a disk drive to provide different achievable transfer rates.

Exposing detailed storage characteristics, such as physical storage locations and buffering, can provide more control to performance intensive applications that approaches that abstract the underlying storage approaches.

Using the same protocol at recursive levels of a data transfer request allows introduction of nesting of requests without modification of server interfaces. For example, a direct request from a client to a storage server may be replaced by a request from the client to an aggregation server, which in turn makes multiple separate requests to the storage server to affect the transfer.

Explicit support for three, four, or higher numbers of parties in a data transfer request allows specification of data transfer approaches that avoid data throughput and coordination bottlenecks.

These aspects and features can be used in numerous situations, including, but not limited to, use in Web Attached Storage and/or Representational State Transfer (RESTful) Storage.

In one aspect, in general, a storage server in a distributed content storage and access system provides a mechanism for dynamically establishing buffers with specified semantic models. For example, the semantic models support distributed control of single buffering and double buffering during a content transfer that makes use of the buffer for intermediate storage.

In another aspect, in general, a method includes examining characteristics associated with a desired transfer of data, such as a unit of content, and then selecting characteristics of a first storage resource based on results of the examining. The desired transfer of the data is then affected to use the first storage resource element.

Aspects can include one or more of the following features.

Examining the characteristics associated with the desired transfer includes examining characteristics of the unit of content.

Examining the characteristics associated with the desired transfer includes examining at least one of characteristics of the unit of content, desired communication characteristics of the transfer, and a location of a source and/or a destination of the desired transfer.

Selecting characteristics of a first storage resource element includes selecting from amongst a set of predefined storage resource element types. In some instances, the selecting is done according to semantic models associated with the resource elements. In some instances, the selecting is by a buffer type, which may include a type of buffer semantics.

Selecting characteristics of a first storage resource element includes selecting parameters for the first storage resource element. For instance, selecting parameters for the first storage element includes selecting a size of the first storage element.

Affecting the desired transfer of the unit of content using the first storage resource element includes passing data from a source of the desired transfer to the first storage resource element and passing data from said first element to a destination of the desired transfer.

The method includes requesting forming of the first storage resource element according to the selected characteristics.

The method includes providing instructions to transfer data from a source of the desired transfer to a destination of the desired transfer using the first storage resource element.

In another aspect, in general, a method includes receiving a selection of a first storage resource element according to a selection of a semantic model associated with the storage resource element. The first storage resource element is then formed. Instructions to affect a desired transfer of a unit of content using the formed first storage element are then received.

Aspects can include one or more of the following features.

The method includes providing an address for the formed first storage element.

Receiving the instructions to affect the desired transfer includes receiving instructions specifying the address of the formed first storage element.

Forming the first storage element includes forming a buffer storage element according to the selection of the semantic model.

In another aspect, in general, a distributed storage and access system includes multiple storage servers and communication links coupling the storage servers. The storage servers include a first storage server that is configured to establish a first storage resource according to a selection of a semantic model for said storage resource. Each of the storage servers includes an interface for accepting data transfer instructions according to a common protocol. These instructions identify endpoints of the data transfers according to a common naming approach for storage resources.

Aspects can include one or more of the following features.

The first storage server includes an interface for accepting a data transfer instruction according to the common protocol identifying the established first storage resource according to the common naming approach.

The first storage resource includes a buffer.

In another aspect, in general, a storage server includes a first data storage device, a controller, a second storage device, and an interface for accepting data transfer requests. The interface is configured to accept data transfer requests including (a) requests for transfer of data between the first storage device and the second storage device, and (b) requests for transfer data between the second storage device and a location external to the server. The interface may be further configured to accept data transfer requests including (c) requests for transfer data between the first storage device and a location external to the server.

Aspects can include one or more of the following features.

The first storage device includes a persistent storage device and the second storage device includes a volatile storage device.

The interface is further configured to accept requests to establish storage elements in the second storage device.

The interface is further configured to accept characteristics of storage elements in the second storage.

In another aspect, in general, a distributed content storage and access system includes storage resources that implement semantic models that permit distributed control of transfers of content via intermediary storage devices. For example, a request to pass data via an intermediary buffer does not necessarily require further control of the writing and reading of the buffer during the requested transfer.

Aspects can include one or more of the following advantages.

Implementation of particular semantic models for the intermediate buffers enables distributed control of the writing and reading of the buffers without necessarily requiring a party requesting a data transfer via the buffer to maintain detail control of the transfers. For example, tight synchronization between the requestor and a server hosting the buffer may be avoided.

Providing selectable semantic models for the intermediate buffers can provide flexibility for the requestors of content transfers, thereby, allowing the requestors to select buffer semantics that are appropriate to application or infrastructure constraints.

Providing explicit control of the buffer characteristics, such as type (e.g., semantic model), size, and location, and more particularly allowing control of the buffer characteristics on a finer grain than according to an entire storage device or system, can greatly improve performance over a scenario in which a fixed type of buffer is used without substantial control of the buffer characteristics.

One example of this type of advantage occurs when access to data stored in a storage resource (e.g., stored on a disk or on an array of disks) includes different types of data. For example, some data may include relatively long parts (e.g., digitized movies) that are accessed sequentially, but that may not experience frequent repeated accesses, while other data may include relatively short parts (e.g., digitized advertisements) that are accessed repeatedly. An appropriate buffering arrangement for the sequentially accessed long parts may be a double-buffering approach, potentially using larger transfer sizes from the storage device to the buffer than are used from the buffer to a client device. An appropriate approach for the relatively short parts may involve use of a pool of buffers, which are reused in a least recently used (LRU) approach. Furthermore, the characteristics of the buffers may depend on the characteristics of particular transfers. For example, the length, data rate, channel characteristics to the client device (e.g., rate jitter), buffer characteristics at the client device, may all factor in a decision on the type of buffer approach and specific parameters of the buffer for the particular transfer.

Another example of this type of advantage occurs when it may be appropriate to select a location for a buffer based on its geographic or network topological location. As one example, it may be appropriate to use one location of buffers for transfers to particular client devices (i.e., those connected to a particular access network) and another location of buffers for transfers to other client devices. In some examples, these buffers may have multiple ports (e.g., network connections) which are specifically addressed with different ports providing connections to particular storage devices and particular client devices.

In another example of an advantage of explicit buffering, a chain of buffers (or other topology, such as a tree with a root associated with a client and leaves associated with storage devices) may be established for a transfer of data to a particular client. For example, some of the buffers may serve a function of aggregating and/or ordering data for transmission toward the client.

An advantage of having a preconfigured set of types of buffers, which can be instantiated with specific parameters or allocated from a pool, is that a requestor of a transfer between a storage system and another data source or destination can also select the appropriate type of buffer for the particular transfer. The selection may be dependent on higher-level logic such a monitor workload and device and communication link characteristics.

Another advantage relates to the use of nested data transfer requests. For example, a first client may request that a coordinator transfer data from a source to a destination. The coordination may take the characteristics of the request, select (e.g., instantiate or allocate) an appropriate buffer (type, location, size, etc.) and recursively issue further requests acting as a second nested client to affect transfers from the source to the buffer and from the buffer to the destination. In this way, the logic of buffer selection and use may be hidden from the original requestor, but still selected on the basis of overall characteristics of the request.

Another advantage may include use of hardware architectures that are presently used, but providing a different access protocol. For example, a system with a disk drive, controller, and buffer may be reconfigured to allow direct addressing of the disk drive and/or explicit addressing of the buffer attached to the controller, with the controller being configured to pass data either directly between the disk drive (or with minimal buffering) and an external interface, between the disk drive and the integrated buffer, and between the buffer and the external interface. The controller could also be configured to provide the function of establishing the individual buffers for various types and specific parameters using the overall buffer storage in the integrated device.

Another advantage is that the explicit buffers and storage devices may be integrated in an overall system, for example, as a network attached storage device or an intelligent storage system, while providing selection of different buffer types for different types of transfers.

An advantage of providing a uniform address and access protocol for storage devices and buffers, for example, using an HTTP-based protocol with URI-based specification of buffer address and storage device addresses simplifies deployment and modification of complex systems.

In general, in one aspect, the invention features a system having components that collectively perform functions and services of the system. The components are managed as belonging to at least a first component collection and a second component collection. The components of the first component collection operate at a time scale that is substantially temporally independent of the components of the second component collection. The components of the first component collection have a first set of temporal requirements and the components of the second component collection have a second substantially different set of temporal requirements.

Aspects of the invention may include one or more of the following.

The components of the system are further managed as belonging to a third component collection. The components of the third component collection operate at a time scale that is substantially temporally independent of the components of the first and second component collections. The components of the third component collection have a third set of temporal requirements, the third set of temporal requirements being substantially different from both the first and second sets of temporal requirements.

The components of each component collection internally coordinate respective operations in accordance with a collection-specific consistency model.

The components may be hosted on a plurality of nodes that are interconnected by a data network.

The components of the first component collection may be hosted on a first plurality of nodes that are interconnected by a data network, and the components of the second component collection may be hosted on a second plurality of nodes that are interconnected by the data network.

The components of the first component collection may be hosted on a first plurality of nodes that are interconnected by a data network, the first plurality of nodes including a first node, and the components of the second component collection may be hosted exclusively on the first node.

At least one of the component collections implements a consistency approach for maintaining a shared state accessible to components of that component collection.

The external interfaces of the system may be exposed by multiple of the component collections.

In general, in another aspect, the invention features a system having components that collectively perform functions of the system. The components are managed as belonging to respective ones of the following planes: a system plane, a content plane, a session plane, an access plane, and a transfer plane. The components of each plane operate at a time scale that is substantially temporally independent of the components of any one of the other planes, and the components of each plane have temporal requirements that are substantially different from those of components of any one of the other planes.

Aspects of the invention may include one or more of the following features.

The components of each plane may internally coordinate respective operations in accordance with a plane-specific consistency model.

The components of the system plane may collectively perform functions that provide overall visibility and management of the system.

The components of the content plane may collectively perform functions that organize and manage content storage on the system.

The components of the session plane may collectively perform session management functions. The session management functions may include one or more of the following: session initiation, session termination, and session-specific resource allocation.

The components of the access plane may collectively perform functions to enable data transfers associated with one or more storage resource elements.

The components of the transfer plane may collectively implement functions to perform data transfers.

The components may be hosted on a plurality of nodes that are interconnected by a data network.

In general, in another aspect, the invention features a method that includes managing components of a system as belonging to at least a first component collection and a second component collection, enabling components of the first component collection to operate on a time scale that is substantially temporally independent of a time scale on which the components of the second component collection operate, and internally coordinating operations executed by components of the first component collection in accordance with a first set of temporal requirements and separately internally coordinating operations executed by components of the second component collection in accordance with a second different set of temporal requirements.

Aspects of the invention may include one or more of the following features.

The method may further include enabling communication of requests between components of the first and second component collections without requiring coordination of distinct requests.

The method may further include enabling communications to pass between pairs of planes without regard as to coordination requirements of the components associated with the respective communications.

The method may further include enabling communications to pass between pairs of components that operate on different time scales.

In one aspect, in general, a distributed system is hosted on multiple interconnected nodes. The system includes a number of planes, each plane including a number of components hosted on nodes of the system. Each plane independently implements a consistency approach among distributed components of that plane. The system has interconnections between interfaces of the planes. Each plane provides interfaces to other planes at one or more of the nodes without guaranteeing consistency for requests received at the interfaces to other planes. In one example, the system is applied to the storage and access of multimedia content, in which a transfer plane includes components for transfer of content between nodes and a system plane includes components for managing configuration information for the system.

Aspects can include one or more of the following advantages.

Independent coordination of components at different planes allows use of different coordination approaches, each appropriate to the functions provided by the plane. This may provide an overall performance advantage and may simplify specification and development of the overall system.

A coordination approach implemented at one plane is isolated from performance requirements at another plane. For example, a function blocked at one plane does not directly impact timing performance of functions at another plane.

Development of software or other specifications of the planes is simplified by avoiding consistency guarantees between the planes. For example, permitting any order of handling of inter-plane requests imposes no or minimal additional consistency requirements within a plane.

Other general aspects include other combinations of the aspects and features described above and other aspects and features expressed as methods, apparatus, systems, computer program products, and in other ways.

Other features and advantages of the invention are apparent from the following description, and from the claims.

### Description of Drawings

FIG. 1 is a block diagram of a distributed data storage system.
FIG. 2 is a block diagram of a data storage server.
FIG. 3a is a ladder diagram of a basic data transfer flow.
FIG. 3b is a ladder diagram of a basic data transfer flow.
FIG. 4 is a ladder diagram of a complex four-way data transfer flow.
FIG. 5 is a ladder diagram of a complex four-way data transfer flow.
FIG. 6 is a block diagram of a system.
FIG. 7 is a state diagram of a read buffer.
FIG. 8 is a state diagram of a write buffer.
FIG. 9 is a state diagram of a read/write buffer.
FIG. 10 is a state diagram of a double buffer.
FIG. 11 is a state diagram of a FIFO buffer.
FIG. 12 is a block diagram of a system.
FIG. 13 is a flowchart.
FIG. 14 is a block diagram of a system.
FIG. 15 shows an exemplary content storage and delivery system.

### Description

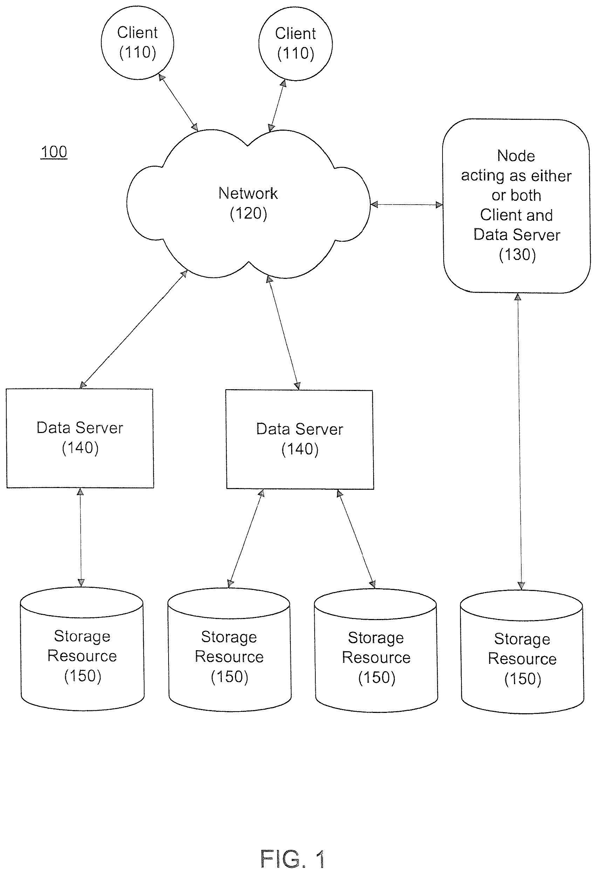

Referring to FIG. 1, a system 100 makes use of network-based storage. A data network 120 links a number of nodes 110, 130, & 140 on the network so that commands and data can be transferred between the nodes. The nodes include a number of data servers 140, which provide mechanisms for storing and accessing data over the network. The nodes also include a number of clients 110, which can take on various roles including initiation of data transfers between nodes, source of data sent to data servers, and destination of data sent from data servers. In some examples, a node can act as either or both a client and a server 130. Note that in this description the term "client" is used more broadly than in the context of a two-party "client/server" interaction. Note that the "nodes" described herein are not necessarily distinct computers on the data network, and may represent component implementing corresponding functions. The components may be hosted together on particular computers on the data network, or whose function is distributed over multiple computers.

Data transactions in the system, in general, involve nodes participating in a transaction taking on one or more roles. These roles include: the requestor of the data transaction, which can be referred to as the "client" role; the coordinator (or "actor") that controls the transaction, which can be referred to as the "server" role; the source for the data ("data source"); and the destination for the data ("data destination"). As outlined above, a client 110 can, in general, take on the role of a requestor, a data source, or a data destination. For example, in some transactions a single client 110 can take the role of both the requestor and either the data source or the data destination for a particular data transaction, while in other transactions, one client can be the requestor of a transaction while another client is the data source or data destination. A data server can, in general, take on the role of a coordinator (actor/server), a data source, or a data destination. In some transactions, a single data server 140 can take on the role of both the actor and either the data source or data destination.

A node 130 may take on different rolls in different transactions, or as part of an overall transaction. For example, a node may act as server for one transaction and as a client for another transaction. Because an individual transaction may be part of a larger transaction, a node 130 may act as both client and server over the course of an overall transaction which is carried out as an aggregation of smaller transactions. A node 130 may take on all of the roles (requestor, coordinator, data source, data destination) in a single transaction.

In general, each data server 140 is responsible for managing at least one data storage resource 150, typically a physical data storage medium. Examples of data storage resources include magnetic discs, optical discs, and circuit-based memory. Data storage resources can be volatile or non-volatile. A storage resource may even be one or more other data servers. In FIG. 1, the storage resources 150 are illustrated as separate from the storage servers 140, but it should be understood that a storage resource may be integrated with the storage server (e.g., within a single computer system). Also, the communication link between a storage server 140 and a storage resource 150 may pass over the network 120, or may be entirely separate from the network (e.g., using another network in the system or a direct connection between nodes).

A data server 140 provides access by clients 110 to a storage resource 150 by an addressing scheme associated with that server. Examples of addressing schemes include direct addressing schemes and abstract addressing schemes. An example of a direct addressing scheme is by physical location on a storage resource, such as by specific disk, cylinder, head, and sector. Such direct addressing can give clients express control over data storage locations. Examples of abstract addressing schemes include the use of logical block numbers or other mappings of names spaces onto storage locations. For example, a scheme may use virtual "unit" numbers and allow clients to specify the resource, an offset, and an extent. An addressing scheme for a resource may use a combination of direct and abstract addressing, for example, using a logical unit number, but physical tracks and sectors in the logical unit.

The system 100 uses a globally unique naming scheme where each storage resource, and each addressable portion of each resource, has a globally unique name. The resource addressing scheme used by a data server is unique within the server's namespace. Each server also has a unique identifier. The combination is a globally unique name for each addressable resource. In some examples, the system uses a naming scheme in which a resource address is specified based on a uniform resource identifier (URI), identifying a unique namespace and the unique address within that namespace. In some examples the URI also specifies a network location, e.g., as a uniform resource locator (URL). More information about URIs (and URLs, which are a subset) is available in Uniform Resource Identifier (URI): Generic Syntax, Berners-Lee et al., Internet Engineering Task Force Standard 66, Network Working Group RFC 3986, January 2005.

In general, a URI specifying a portion of a storage resource managed by a storage server include a part that specifies the host name or network address of the storage server, for example, as a name compatible with an Internet Domain Name Server (DNS), which may be used to provide dynamic address translation services. For more information about DNS, see Domain Names - Concepts and Facilities, Mockapetris, Network Working Group RFC 1034, November 1987, and Domain Names - Implementation and Specification, Mockapetris, Network Working Group RFC 1035, November 1987. In one example, the URI also includes a portion that identifies the resource, and a delimiter, such as a query indicator ("?") or a fragment indicator ("#") following which a specification of the particular portion of a storage resource is provided. The resource naming schemes may also incorporate versioning information for extensibility. In some examples, a session naming scheme is incorporated into the URI.

An example URI address is:
http://server1.example.com/unit1#0-1000000
In this example,
- the URI-scheme, http, identifies that the access protocol follows HTTP syntax,
- the URI- host, serverl.example.com, identifies the data server (this could also be in the form of an IP address, e.g. 10.0.0.1),
- the last URI-path segment, unit1, identifies the resource (e.g. a disk),
- the URI fragment indicator, #, is used as a delimiter,
- the pre-hyphen URI-fragment component, 0, indicates an offset of zero (i.e. the beginning of the resource), and
- the post-hyphen URI-fragment component, 1000000, indicates an extent of 1 million bytes.

Another example URI address is:
http://server1.example.com/unit1?offset=0&extent=1000000
In this example,
- the URI-scheme, http, identifies that the name follows HTTP syntax,
- the URI- host, server1.example.com, identifies the data server (this could also be in the form of an IP address, e.g. 10.0.0.1),
- the last URI-path segment, unit1, identifies the resource (e.g. a disk),
- the URI query indicator, ?, is used as a delimiter,
- the post-delimiter section is a "query" separated into segments by ampersands (&)
- each query-segment has three parts: a label, a separating equal-sign (=), and data
- the segment-label "offset" indicates that the segment-data, 0, indicates an offset of zero, and
- the segment-label "extent" indicates that the segment-data, 1000000, indicates an extent of 1 million bytes. [Note that other labels could be used for to the same effect, e.g. "o" for offset and "e" for extent.]

Another example URI address is:
http://server1.example.com/unit1/0/1000000
In this example,
- the URI-scheme, http, identifies that the name follows HTTP syntax,
- the URI- host, serverl.example.com, identifies the data server (this could also be in the form of an IP address, e.g. 10.0.0.1),
- the remaining URI-path is composed of three segments:
- the first segment, unit1, identifies the resource (e.g. a disk),
- the second segment, 0, indicates an offset of zero, and
- the third segment, 1000000, indicates an extent of 1 million bytes.

Other URI addressing schemes are also possible.

In general, a storage server 140 performs data storage and retrieval operations for a data transaction initiated by a client 110. In some examples, the transaction is initiated by the client 110 which sends a request (e.g., a message, instruction, command, or other form of communication) specifying the action to be performed and relevant addresses (e.g., a data resource URI for a data source or data destination) associated with the action. A request may also include additional control information. In some examples, some portions of the request are inferred by context. A request protocol can be defined based on the use of URIs. As discussed further below, in some examples the request protocol is defined to make use of the Hypertext Transfer Protocol (HTTP). For more information about HTTP, see Hypertext Transfer Protocol -- HTTP/1.1, Fielding et al., World Wide Web Consortium (W3C), Network Working Group RFC 2616, June 1999. The use of HTTP enables simplified operation of network storage devices distributed over a network. For example, HTTP responses are typically sent from the server to the client over a connection in the same order in which their associated requests were received on the connection. The use of HTTP also provides easy firewall traversal, well understood protocol behavior, and simplified server development.

Continuing to refer to FIG. 1, in general, clients 110 submit requests to data servers 140 over the network 120. The requests include requests to store data on storage resources 150 or to retrieve data from the resources.

A write request is a request by a client 110 directed to a data server 140 to store data on a storage resource 150 managed by the data server 140. A write request can be blocking or non-blocking, can require a completion notification or no completion notification, and can use the requesting client 110 as a data source or another node as a data source.

A read request is a request by a client 110 directed to a data server 140 to access data on a storage resource 150 managed by the data server 140. A read request can be blocking or non-blocking, can require a completion notification or no completion notification, and can use the requesting client 110 as a data destination or another node as a data destination.

In some examples, the system supports both synchronous blocking (also referred to as "immediate") as well as asynchronous non-blocking (or "scheduled") requests. In an immediate request sent from a client to a data server, the interaction between the client and the data server does not complete until the data transfer itself completes. In an asynchronous request, the interaction between the client and the data server generally completes before the actual data transfer completes. For example, the server may check the validity of the request and return an acknowledgement that the requested data transfer has been scheduled prior to the data transfer having been completed or even begun.

Requests can be framed as a two-party transaction where a requesting client 110 is also either the data source or data destination and a data server 140 is the reciprocal data destination or data source. Such requests can be termed "read" or "write" as appropriate from the perspective of the client. That is, a "read" request initiates a transfer from the data server to the client while a "write" request initiates a transfer from the client to the server. For two-party transactions between a client and a server, in some examples the data being sent from or to the client can be included in the same interaction in which the request itself is provided. For example, a two-party "write" request may include the data to be written as part of an immediate transaction.

A client 110 can also initiate a transaction in which that client is neither the data source nor the data destination. In one such case, the client initiates a three-party transaction in which the client 110 sends a request to a first data server 140 specifying that data is to be transferred between the first data server 140 and a second data server 140. Such requests can be phrased termed "read" or "write" as appropriate from the perspective of the second data server. That is, such a "read" request initiates a transfer from the first data server to the second data server while a "write" request initiates a transfer from the second server to the first server. While the terms "read" and "write" can be used when the requestor is not a data destination and not a data source, the term "move" may also be used. A client 110 sends a "move" request to a data server 140 specifying another data server 140 as either the data source or the data destination. In some examples, a "move" request designates the requestor, e.g., to perform a two-party transaction.

In some examples, the system supports four-party transactions in which a client sends a request to a node specifying the data source and the data destination, neither of which is either the initiating client or the node acting on the request. That is, the requestor (first party) instructs the coordinator (second party) to move data from a data source (third party) to a data destination (fourth party). This transaction may also be described as a "move."

In multi-party transactions, in some examples, the data transfer requested by the client can be executed as a separate interaction. For example, in the case of a two-party transaction between a client and a server, the data transfer can be implemented as one or more secondary interactions initiated by the data server using a call-back model. Note that such a separate interaction is in general compatible with both immediate and asynchronous requests. In the case of a multi-party transaction in which the client is neither the data source nor the data destination, the data server can similarly initiate the separate interaction to perform the data transfer requested by the client. Any request in a transaction can be recursively transformed into one or more requests using the same protocol or other protocols. Using the same protocol creates a uniform recursive protocol allowing any one request to be expanded into any number of requests and any number of requests to be aggregated into a single request.

Network storage allows clients to explicitly and specifically control the use of storage resources with a minimum level of abstraction. Traditional resource management responsibilities can be implemented at the server level or abdicated to the user. For example, a server can be implemented without any coherency guarantees and/or without any allocation requirements. Additionally, no requirement is made for the use of sessions, although an implementation may incorporate some notion of session syntax. Event matching can be handled through acknowledgment or event messages. Data servers can also be extended, for example, to support more semantically enhanced storage resources, which may serve roles as buffers and intermediary dynamically created data destinations.

In general, a data server 140 receives requests from a number of different clients 110, with the requests being associated with data transfers to or from a number of clients and/or data servers on the network 120. In different examples of data servers, for example with different examples being used in the same example of the overall system, different scheduling approaches can be used to service the requests from clients. As one example, a first-in-first-out (FIFO) queue of outstanding client requests can be used. Other examples may involve out-of-order and multi-threaded servicing of requests.

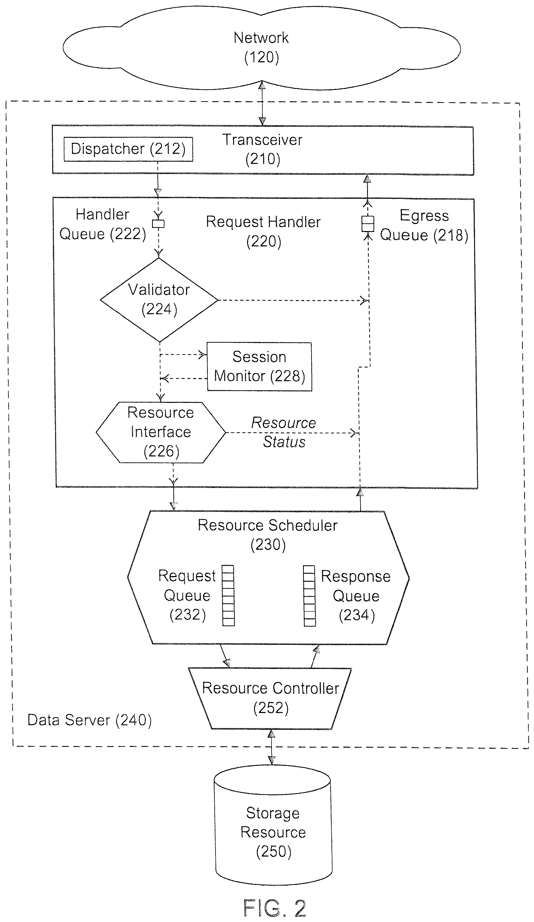

Referring to FIG. 2, in one example, a data storage server 240 manages access to one or more storage resources 250. A resource controller 252 acts as an interface between the storage resource(s) 250 and anything trying to move data. The resource controller 252 may maintain a logical-to-physical address map, if one is used. The resource controller 252 is accessed through a resource scheduler 230 managing a request queue 232 and a response queue 234. The resource scheduler 230 manages the order of the request queue 232. In one embodiment, the queue is operated as a first in, first out (FIFO) queue. In another embodiment, the request queue is managed according to the storage resource. In another embodiment the request queue is managed to meet request constraints, for example processing requests based on when the data transfer should begin or finish (e.g., deadlines). In another embodiment, the request queue is managed to account for both request constraints and resource optimizations. For example, the request queue is treated as a series of time slots or bins. A request that has a deadline within a short period of time goes into the first bin and requests with later deadlines go into later bins. Each time slot, or bin, is then further optimized by resource impact. For example, where the resource is a physical disk, each bin may be organized to optimize seek and rotational delays (e.g., organized such that the disk head does not have to reverse directions while processing the bin). The resource scheduler queues 232 and 234 may, for example, be implemented with circuit-based memory. If the resource scheduler becomes overloaded, for example, requests exceed the available memory space, requests are rejected with an appropriate status notification (e.g., "resource busy").

Resource requests are processed by a request handler 220. The request handler 220 works from a handler queue 222. Each request is parsed and validated 224 and then submitted to the appropriate resource interface 226. Resource interface 226 submits the request to a resource scheduler. Either a resource status (e.g., request scheduled/resource busy) or a response (e.g., request complete) is then returned via an egress queue 218. In some embodiments, additional features make use of sessions, which are monitored by session monitor 228.

Communication between a data server 240 and a requestor is carried by data network 120. The data server 240 includes a transceiver 210 for handling network connections and communication. Requests arrive at the transceiver 210 and are sent to a request handler 220 via a dispatcher 212. One data server 240 may have multiple request handlers 220, for example, having one handler for each available processing core. Dispatcher 212 selects a request handler 220 for each request, placing the request in the selected hander's queue 222. Selection can be determined, for example, by next available handler. In some embodiments, specialized handlers expect to process specific types or forms of requests. The dispatcher 212, in these embodiments, accordingly selects the request handler based on request type or form. This is done, for example, by using specific ports for specialized requests. Specialized requests might be alternative request formats or a restricted sub-set of the generalized format used by the embodiment. Multiple request handlers, some or all of which are specialized, can be used to distribute the data server work load.

A data server can process requests from multiple clients. In some embodiments, when a client writes data to a server, it may create a conflict with other requests. For example, the result of reading data from an address is dependant on what data was last written to that address. When a read and a write request arrive concurrently, the order in which they are executed will impact the result of the read operation. This is known as a data coherency problem. A data server may be implemented to address coherency concerns, for example by restricting access to a resource to a single session and strictly ordering requests within that session. A sufficiently strict ordering is to require that a server handle an operation only after any previously received write operation in the same address space has finished. An access manager may be employed to prevent clients from unexpectedly blocking other clients or creating a resource deadlock.

In some embodiments, a data server can process requests from multiple clients with no coherency checking between clients, or within requests from a single client. Such an approach moves management of these concerns outside the scope of the data servers, providing greater flexibility in the implementation of the data servers, which may potentially increase performance of the overall system.

In an implementation where a data server has multiple handlers, there may be potential for an additional coherency problem within requests of a single client. In some embodiments, requests from a single connection are processed such that coherency concerns are avoided. For example, all requests on a connection are dispatched to the same handler. In some examples, a handler can inspect each request and look across all other handlers for a conflict and stall the handler until the conflict clears.

The communication network 120 is any network of devices that transmit data. Such network can be implemented in a variety of ways. For example, the communication network may include one of, a combination of, an Internet, a local area network (LAN) or other local network, a private network, a public network, a plain old telephone system (POTS), or other similar wired or wireless networks. The communication network can also include additional elements, for example, communication links, proxy servers, firewalls or other security mechanisms, Internet Service Providers (ISPs), gatekeepers, gateways, switches, routers, hubs, client terminals, and other elements. Communications through the communication network can include any kind and any combination of communication links such as modem links, Ethernet links, cables, point-to-point links, infrared connections, fiber optic links, wireless links, cellular links, Bluetooth®, satellite links, and other similar links. The transmission of data through the network can be done using any available communication protocol, such as TCP/IP. Communications through the communication network may be secured with a mechanism such as encryption, a security protocol, or other type of similar mechanism.

Data servers manage access to data resources. When a request arrives at a server to use that resource, the data server either performs the request immediately or schedules one or more future operations to satisfy the request. If the server can't do one of these things it responds to a request with a rejection or error message. A request that can be satisfied with one or more future operations is an asynchronous request. An asynchronous request may be performed immediately or it can be scheduled, e.g., posted to a work queue for later execution.

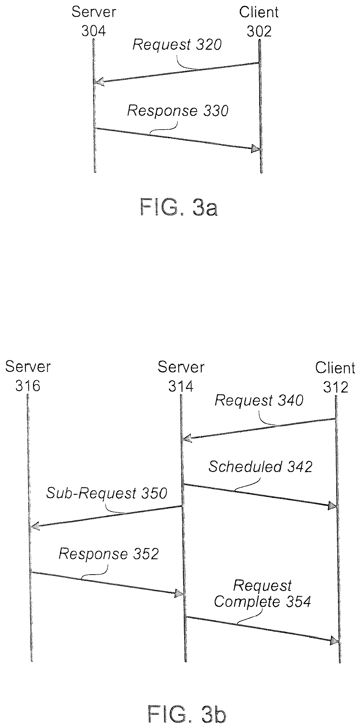

Referring to FIG. 3a, a client 302 submits a request 320 to a server 304. The server 304 process the request and submits a response 330 to the client 302. The request 320 may be to write data accompanying the request, in which case the response 330 may be a confirmation or an error message. The request 320 may be to read data identified by the request, in which case the response 330 may be the data itself or an error message. Other requests are also possible.

Referring to FIG. 3b, a client 312 submits a three-party request 340 to a first server 314. The server 314 may respond with a message indicating that the request is scheduled 342 or with an error message, or even no response at all. Server 314 performs the requested operation, for example by sending a sub-request 350 to a second server 316 and processing a response 352 from the second server 316. Once completed, the server 314 may, in some examples, send a completion message 354 to the client 312. The request is asynchronous if the client 312 does not block waiting for completion.

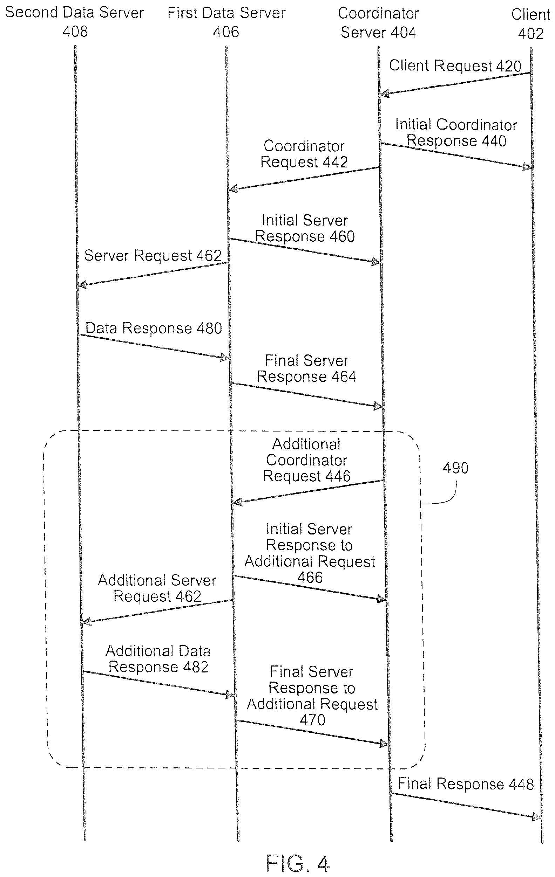

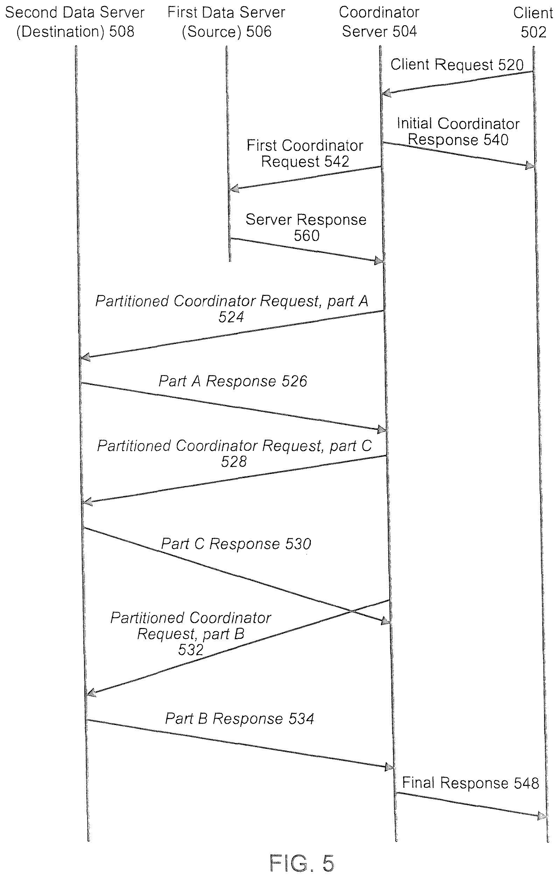

In some examples, the server 314 may use multiple sub-requests 350 to complete the initial request 340. In some situations, the multiple sub-requests are executed in or potentially out of order, for example, to balance the network traffic load or to optimize the performance of storage resources. This is demonstrated further using four-party examples further below, in reference to FIG. 4 and FIG. 5.

Requests may be executed within the context of a session, which may be logical or explicit. A session is a relationship between a client and server. It is independent of what connection or set of connections two devices use to communicate. Sessions may be used, for example, to manage the use of ephemeral server resources by a set of requests. Ephemeral server resources used by the set of requests are bound to a session. When, in this example, a session terminates, resources bound to the session are released. In some embodiments, a session may be identified by a unique name, which can be formed as a URI.

For example, a session might be named:
http://server1.example.com/sessions/049AF012
In this example,
- the URI-scheme, http, identifies that the name follows HTTP syntax,
- the URI- host, server1.example.com, identifies the data server (this could also be in the form of an IP address, e.g. 10.0.0.1),
- the URI-path segment, sessions, identifies the URI as a session,
- the last URI-path segment, 049AF012, is an example session ID within the server1 namespace.

In one example implementation, the data transfer operations can be defined using the HTTP protocol. Quoting section 1.4 of the HTTP RFC (2616): "The HTTP protocol is a request/response protocol. A client sends a request to the server in the form of a request method, URI, and protocol version, followed by a MIME-like message containing request modifiers, client information, and possible body content over a connection with a server. The server responds with a status line, including the message's protocol version and a success or error code, followed by a MIME-like message containing server information, entity meta-information, and possible entity-body content." The MIME-like message is the body of the request and can include custom parameters. The example protocol used here uses this space to include the parameters of data transfer operations.

Read, write, and move requests can be formed as an HTTP request. HTTP POST, GET, or PUT may be used. The parameters included with the request characterize the request. Request parameters can be, for example, part of the HTTP request header (e.g., for a POST request) or, in another example, as part of the request URL (e.g., as segments following a query indicator). The recommended parameters are:
- REQUEST = { "MOVE" |"READ"| "WRITE" }
- SOURCE = URI
- DESTINATION = URI
- ASYNC = {"TRUE" | "FALSE"}
- DEADLINE = Timelnterval
- SESSION = URI
- COMPLETE = {"TRUE" | "FALSE"}
- CONFIRM = URI

The REQUEST parameter specifies the request type. In some embodiments, the values are "MOVE", "READ", and "WRITE". In some embodiments, since the different data transfer request types can be distinguished by the parameters, e.g., source and destination, the request is simply a "MOVE". In some embodiments, there is no REQUEST type. For example, all requests without a request type are treated as a MOVE. In another example,HTTP GET and HTTP PUT are used to provide indication of the request. For example, a GET can indicate a READ and a PUT can indicate a WRITE. In some embodiments, the ASYNC parameter is used to distinguish the synchronous and asynchronous versions. In some embodiments, all requests are asynchronous, eliminating the need for the ASYNC parameter.

The SOURCE parameter specifies a URI address for the data source to be used in operations satisfying the request. A write request may include the data to be written rather than specify a source address. In embodiments using HTTP GET and HTTP PUT to indicate the request type, the SOURCE may be implied. A GET implies that the coordinator is the source and a PUT implies the requestor is the source. The SOURCE parameter can be used to override the implication.

The DESTINATION parameter specifies a URI address for the data destination to be used in operations satisfying the request. The coordinator should reject a request if the destination address indicates a space smaller than the data to be transferred. On a read operation, the data can be included in the response. In embodiments using HTTP GET and HTTP PUT to indicate the request type, the DESTINATION may be implied. A GET implies that the requestor is the destination and a PUT implies the coordinator is the destination. The DESTINATION parameter can be used to override the implication.

The ASYNC parameter is not always required. It is used to differentiate asynchronous requests from synchronous request when this is not clear from the REQUEST parameter or HTTP request type. If set to "TRUE", it indicates an asynchronous request. If set to "FALSE", it indicates a synchronous request. POST may be defaulted to either "TRUE" or "FALSE" depending on the implementation. If a request with ASYNC set to "TRUE" is missing a necessary source or destination (either explicit or properly implied), no data transfer is performed. The coordinator may, however, interpret this action as a hint from the requestor that the requestor may subsequently use some or all of the requested resource.

The DEADLINE parameter is not required. It is used to specify a "need within" time for scheduling purposes. If a requestor specifies a deadline, the coordinator must reject the request if the coordinator is unable to schedule the request so as to meet the deadline. The parameter value is Timelnterval, which is a number specifying an amount of time. By accepting a request with a deadline, the coordinator is promising to complete the requested operating operation before that amount of time has elapsed. It is up to the requestor to compensate, if necessary, for expected network latency in transferring the request to the coordinator. It is up to the coordinator to compensate, if necessary, for expected network latency in transferring the data. If the coordinator does not complete the data transfer in the time indicated, it may continue trying or it may terminate the operation and notify the requestor with an appropriate error event. The deadline is not necessarily a timeout requirement. The deadline conveys scheduling information from the requestor to the coordinator.

The SESSION parameter is not required. When a session URI is supplied, the coordinator executes operations satisfying the request within the context of the given session. If no session is given, the default session context is used.

The COMPLETE parameter is not required. When a session URI is supplied and the complete parameter is set to "TRUE" it indicates that the request is the last in a set of related requests on the connection.

The CONFIRM parameter is not required. When a confirmation URI is supplied, the coordinator will send a message containing the request message expression to the confirmation resource identified by the URI when the request has been satisfied. When the destination is persistent storage, the confirm message will only be sent when the data is persistently stored.

In an example embodiment using an HTTP implementation, the request parameters are placed in the MIME-like body of the request or in the URL as, for example, fragments following a request indicator. An example of an HTTP POST request for a MOVE using the MIME-like body resembles:

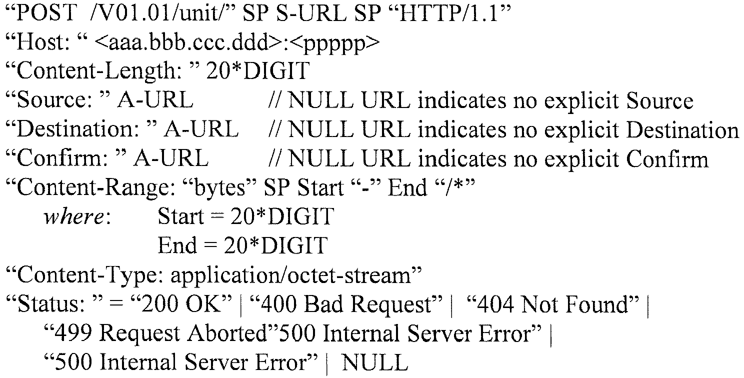

Note that the S-URL in the first line specifies the coordinator of the operation. If Source, Destination, or Confirm are NULL, they default to the S-URL. For example, a POST without a source means the source URL is specified by S-URL. An example S-URL format is as follows.

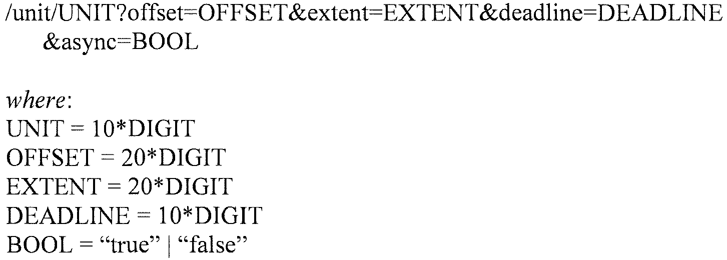

Note also that the fixed length fields shown in these examples (indicated, e.g., as 10^{∗}DIGIT or 20^{∗}DIGIT) are not a requirement. They are an example of how the HTTP syntax can be constrained in a backwards compatible manner to optimize for very high performance processing. A more extensible variable-length embodiment is also envisioned.

Abort requests can also be formed as an HTTP request. The recommended parameters are:
- REQUEST = "ABORT"
- DESTINATION = URI
- SESSION = URI

The REQUEST parameter specifies the request type as an abort. An abort operation performs a best effort termination of previously transmitted requests to a resource.

The DESTINATION parameter specifies a URI address for the resource. When an abort request is received, outstanding transfer operations to that resource are either allowed to complete or are terminated. The coordinator should abort operations only to the degree that it can do so without undue complexity and/or adverse performance effects. Removing a pending operation from a schedule queue is equivalent to terminating the operation. The response to an abort request indicates which outstanding operations were terminated.

The SESSION parameter is not required. When a session URI is supplied, the coordinator should attempt to abort requests bound to the given session. If no session is given, the coordinator should attempt to abort requests bound to the default session.

Event messages can also be formed as an HTTP request. The recommended parameters are:
- REQUEST = "EVENT"
- RESOURCE = URI
- STATUS = { "CONFIRM" | "FAILURE" | "RETRY" | "ABORT" | "BUSY" }
- SESSION = URI

The REQUEST parameter specifies the request type as an event. An event operation is a message exchange originated by the coordinator to a requesting device indicating the presence of a status condition in the execution of an asynchronous request. The request parameter can be an optional parameter if event is used as a default request type.

The RESOURCE parameter specifies the relevant resource for the message, either the source or destination of the asynchronous operation resulting in the event.

The STATUS parameter indicates the condition of the event. The list supplied is not exhaustive. The status parameter can be implemented as an extensible enumeration indicating the abnormal condition. The examples given may indicate:
- CONFIRM - the requested operation is confirmed complete
- FAILURE - the requested operation has terminated without completing
- RETRY - the coordinator has encountered problems in performing the requested operation, but it is continuing to attempt the operation
- ABORT - the requested operation was terminated because of an ABORT operation
- BUSY - the coordinator is unable to schedule or complete the requested operation because it is overloaded

The SESSION parameter is not required. When a session URI is supplied, it indicates the session of the asynchronous operation resulting in the event.

Additional requests can also be used for allocating space on a resource, establishing buffers, or other operations supported by data servers.

A coordinator can meet the obligations of an asynchronous transfer by performing one or more blocking transfers. It can initiate its own asynchronous transfer. It can even use an alternative transfer protocol, for example iSCSI or PCI Express. The coordinator is only obligated to attempt the transfer and to manage requests so that transfers are completed by their associated deadlines. Note that operations may be recursively transformed into constituent operations. A single operation from one node's perspective may be transformed into a multiple operations. Multiple operations may be transformed into a single operation. The original and the transformed operations may use the same URI-based protocol. For example, a coordinator may instruct a destination server to read data from a source server. The destination server may actually perform a set of read operations that, put together, would constitute the requested read. In another example, a client may submit a set of write requests to a coordinator server, where the data is to be written to a destination server. The coordinator may aggregate the write requests into a single write request to the destination server. Any request may be handled in this matter. In some cases, the recursion will be very deep with a series of servers each passing requests to other servers.

Referring to FIG. 4, as an example of a four party transaction, a requestor client 402 can request that a coordinator server 404 manage the transfer of data between a first data server 406 and a second data server 408 where the data does not necessarily pass through the coordinator 404. In this example, the client request 420 might simply be to move the data by a deadline. After receiving a confirmatory response 440, the client may assume that the request will be satisfied. Coordinator server 404 then issues a set of requests to conduct the data transfer. For example, an initial request 442 is sent to the first data server 406, which is confirmed or rejected by an initial server response 460. In some examples, no response is sent until the requested transaction is complete. The first data server 406 performs the requested transaction by sending a request 462 to the second data server 408. That request is replied to with a data response 480. For example, if the server request 462 was a READ, the data response 480 might be the data itself. In another example, if the server request 462 was a WRITE, the data response 480 might be a confirmation. The response 480 may alternatively be an error message. The first data server 406 may also send a final server response 464 to the coordinator 404.

The coordinator 404 may issue any number of additional requests 446 as it coordinates the transaction. Each additional request will follow a similar pattern 490, with a possible initial server response to the additional request 466, an additional server request 468, additional data response 482, and a final server response to the additional request 470. Note that any one request may be recursively transformed into one or more new requests satisfying the one request. Likewise, any number of requests may be aggregated into one request. Also, the four roles (client, coordinator, source, and destination) may be four separate systems or some systems may take on multiple roles. That is, the four parties can reside in one, two, three, or four physical locations.

When the entire transaction is complete, the coordinator may send a final response 448 to the client 402. The final response 448 may indicate that the original client request 420 has been satisfied, or that there was an error. In some implementations there is no final response 448. In some implementations there is only a final response 448 in error conditions. This transaction may take place in the context of a session.

Referring to FIG. 5, in a more specific example, requestor client 502 sends a client request 520 to a coordinator server 504. In this example, the request 520 is for data to be moved from a source, first data server 506, to a destination, second data server 508. The coordinator 504 may send an initial coordinator response 540 to the client 502, for example, to confirm or reject the request 520. The coordinator 504 determines how best to achieve the move, and in this example it decides to move the data from the source 506 to the destination 508 via itself. This may be, for example, because no better (e.g., faster) data path exists between the two servers. It may be, for another example, because causing the data to flow directly from the source 506 to the destination 508 would slow down the better paths in an unacceptable manner. Whatever the particular reason, coordinator server 504 sends a first MOVE (or, READ) request 542 to first data server 506. First data server 506 responds 560 with either an error message or the requested data. The coordinator server 504 then writes the data to the second data server508.

Note that this example demonstrates partitioning this action into a set of partitioned coordinator requests (A, B, & C), which may be formed as a MOVE or a WRITE. The number of partitions is only an example; in practice any number of partitions can be used. Some partitioned requests may even take alternative routes and/or be formed as four-party requests with the coordinator server 504 acting as the client. In this example the three partitions are sent out of order (A, C, & B) and in a manner demonstrating that the requests do not need to be serialized or made to wait for responses. Specifically, in this example, part A 524 is sent to second data server 508 and the second data server 508 replies with part A response 526. The response, for example, may be a confirmation or an error message. In some implementations there is no response or there is only a response in an error situation. Coordinator server 504 sends partitioned coordinator request part C 528 and the second data server 508 replies with part C response 530. In this example there is no need for the coordinator server to wait for the response. It may send additional requests, e.g., partitioned coordinator request part B 532, before receiving confirmation messages, e.g., part C response 530. The coordinator server 504 sends partitioned coordinator request part B 532 and the second data server 508 responds with part B response 534.

After satisfying the client request 520, coordinator server 504 may send a final response 548 to the client 502. The response 548 may be a confirmation of success or an indication of error. This transaction may take place in the context of a session.

Data servers may also support client-allocated buffer elements to provide for the explicit use of data resources in staging data transfers. The protocol presented above can be extended to allow clients to allocate buffer resources. In a buffering arrangement requestors are able to request the use of a buffer, control the creation and life of a buffer, continue to directly address storage resources, and directly address a buffer. Direct addressing of a buffer allows the buffer, once established, to be used like any other storage resource, albeit within the constraints of the buffer. A buffer can be tied to a session and released when the session is terminated. Buffers may have associated semantics, for example, queuing semantics, reducing the communication and synchronization needed to complete a complex transaction. A buffer might be used to stage a transfer where the available bandwidth isn't uniform, where the source and eventual destination are geographically far apart, or where the availability of a resource has additional constraints such as availability or speed. Other uses also include keeping the size of disk allocation units independent from the size of buffers used elsewhere in the system. Buffers, and other dynamically created storage resources, may be used for other purposes as well, for example, optimizing content availability for a particular usage pattern.

FIGS. 1-5 above describe aspects of a system for content storage and delivery. As discussed above, in some embodiments, such a system includes a number of nodes of a distributed system that provide or interface to storage resources. For example, these nodes provide storage functions for maintaining digital content either in a persistent, or in a transient manner during transfer of the content.

In general, the system described above includes description of an approach to accessing storage resources using a protocol involving requests by a first party (a "requestor") that are received and coordinated by a second party (a "coordinator") to move data from a third party (a "data source") to a fourth party (a "data destination"). In general, combinations of the first, second, third and fourth parties may be the same party acting in different capacities. In general, the described requests do not necessarily rely on storage resources with advanced semantic models.

In some embodiments, semantic buffers, which are a subclass of a broader concept of semantic storage resources, are used. These buffers are essentially network accessible resources that may constrain as well as enhance the protocol. For example, one can define a buffer resource to have specific methods that can be invoked through the access protocol that regulates the behavior of the buffer resource.

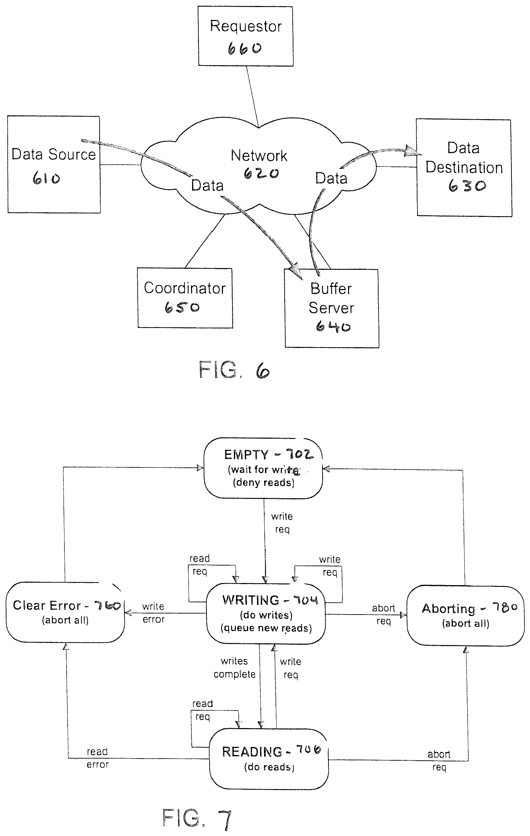

As used hereinbelow in conjunction with FIGS. 6-13, the terms semantic constraints or semantic model relate to constraints on handling of requests based on the content of the requests. For example, the handling may relate to whether requests are accepted or rejected, and on ordering constraints on when the requests are actually handled. For example, in many of the examples of requests to storage resources described above in conjunction with FIGS. 1-5, little if any constraints are applied to whether requests are accepted (given that they are well formed and are semantically meaningful, for example, referring to known storage resources) or the order in which the requests are handled.

In some versions of a content storage and access system, a semantic constraint may impose a constraint on the ordering of handling of requests made to a storage resource based on the ordering of the receipt of the requests. One example of such a constraint is a requirement that a request to write content at a location in a storage device must complete before subsequently received requests to read content from that location are handled. Such a constraint can simplify operation of a requestor that may issue multiple requests in sequence.

In some versions of a content storage and access system, semantic constraints are used to provide a way of distributing coordination of multiple related data transfers so that they can be efficiently executed without substantial ongoing synchronization. In some examples, this coordination relates to the use of intermediate storage resources that are essentially used as buffers during the transfer of content from a persistent storage resource to the ultimate destination of the content. The underlying storage technology for such a buffer is largely independent of the semantic model, for example, with either magnetic disk or solid state memory technologies being used. Note that in some examples, the intermediate storage does not have to be implicitly bound to a particular storage device or subsystem and can be directly configured and managed.

Referring now to FIG. 6, an example system 600 demonstrates context for a semantically constrained data transfer system. A requestor 660 makes one or more request of a coordinator 650 to achieve a transfer between a data source 610 and a data destination 630. For some such requests, the requestor 660 makes use of an intermediate storage server 640, which supports a buffer storage resource that implements one or more of the semantic models describe below. In FIG. 6, a common network 620 is shown linking the components of the system. It should be noted that in general, separate networks may be used, for example, with a different network being used to transfer content from the data source 610 to the buffer server 640 than is used for the transfers between the buffer server 640 and the data destination 630. Also note that in some examples, the coordinator also acts as the buffer server.

Some examples in which a requestor 660 may choose to use an intermediate buffer server 640 relate to situations in which the communication characteristics (e.g., maximum throughput, latency, jitter, etc.) between the data source and the buffer server are different (e.g., substantially larger or substantially smaller) than those between the buffer server and the data destination.

In some examples, the buffer server includes predefined buffers. For example, as described above in conjunction with FIGS. 1-5, each of these buffers, and more particularly specific ranges of storage locations within the storage buffers, are addressable using a naming scheme in which a buffer address is specified with a universal resource identifier (URI), identifying a unique namespace for the buffer server and the unique resource address within that namespace. More information about URIs is available in Uniform Resource Identifier (URI): Generic Syntax, Berners-Lee et al., Internet Engineering Task Force Standard 66, Network Working Group RFC 3986, January 2005. A buffer may also be tied to a session such that when the session terminates, the buffer and any associated resources are released.

In some examples, buffers are dynamically established (e.g., allocated) and released, for example, on an as-needed basis. For example, in addition to data transfer requests from a requestor (e.g., directly to the buffer server, or via a coordinator), a requestor can send a buffer establishment request, for example, providing a size and a specification of the semantic model to be implemented by the buffer, and in return receive a name of a suitably established storage resource (in this case a buffer). In some examples, requests to instantiate buffers are implicit based on the transfer requests involving the named buffers. The specification of the semantic model of the resource to be established can, in some examples, be formed as a selection from a known set of models (with or without additional parameters) or, in some examples, it can be formed as a detailed specification of the model. In some embodiments, the storage resource exists before the request and is simply assigned to the requestor. In some embodiments, the storage resource is created specifically for the requestor and destroyed when released.

A request to establish a buffer can include specification of an allocation or reservation of resource space (for example memory or disk space) and semantic constraints on how that resource space is accessed. Once successfully established, the buffer server returns a unique identifier for the buffer allowing direct, but semantically constrained, accessing of the resource space controlled by the buffer. The process of establishing a buffer can be implemented with a single command or by a series of commands with the client first allocating or reserving the resource space and then requesting the buffer affiliation with that space. Once mapped to a resource space, a buffer can perform address translation and range checking so that the mapped resource space is byte addressable from offset 0 through Buffer-Size minus 1. Resource access through a buffer is restricted to the resource space affiliated with the buffer. Any request that would access resource space outside the range of the buffer is rejected.

The semantic constraints of a buffer constitute a set of rules for how and when the resource space can be accessed. The buffer server enforces these constraints by contextually allowing, queuing, or rejecting requests as the constraints require. An example of a semantic constraint would be a requirement that the first request writing data into the resource space must complete before any requests to read data from the resource space are honored. The read requests could be rejected or queued for delayed processing as determined by the constraint. Semantic constraints reduce the up-front round trip delays that otherwise result from end-to-end synchronization. That is, without the added constraints, a client could coordinate the movement of data into and out of the allocated space by waiting for each transfer into the allocated intermediary resource to complete before sending any commands to read from the allocated intermediary resource, and vice versa.

Different sets of constraints are appropriate for different access patterns. For example, a buffer can be oriented towards a single write followed by multiple read requests, a buffer can be oriented towards multiple write requests followed by single read request, or a buffer can be oriented towards various degrees of concurrent writing and reading. Other usage patterns can also be handled by an appropriately arranged buffer. Some of these examples are detailed here. Note, that as with other Network Storage operations, operations may be recursively transformed into constituent operations. Thus a single write from the client's perspective may get transformed as multiple writes. Multiple writes or reads can get transformed into a respective single write or read.

### BASIC BUFFER

The basic buffer performs no function other than address translation and range checking. Synchronization, in this case, is the sole responsibility of the client.

### READ BUFFER

FIG. 7 represents the state transitions of a read buffer. Upon creation, the buffer is in empty state 702 where it waits for a request to write data into the buffer (a buffer write request) and denies all requests to read data from the buffer (a buffer read request). Upon receiving a buffer write request, the buffer transitions into writing state 704 where it queues all new buffer read requests until all write requests complete. When the write requests all complete, the buffer transitions to reading state 706 where it processes all buffer read requests until either a buffer write or buffer abort request is received. Upon receiving a write request, the buffer returns to writing state 704, where it stops removing queued read requests and queues any new read requests. This semantic model may require light client side synchronization, e.g., completing all read operations before issuing a write operation. In some implementations a flag is placed in the read queue and the read queue is processed up to the flag. In some implementations multiple read queues are used, where a new queue is used to receive read requests arriving after the write request and the earlier queues continue to be processed. These models may also require light client side synchronization to prevent writing over the data being read. If an error occurs in writing state 704 or reading state 706 the buffer transitions to clear error state 760 and aborts all operations queued or in progress that can be efficiently aborted. The buffer then returns to empty state 702. Upon receiving an abort request, the buffer transitions to aborting state 780 and aborts all operations queued or in progress that can be efficiently aborted. The buffer then returns to empty state 702.

A buffer write request is a write request that specifies the buffer resource as the destination of the data transfer. If the write operation would overflow the buffer, the request is denied.

When multiple write requests are used with a read buffer, the buffer benefits from the use of an explicit operation indicating that the write requests have completed. Implicit detection of write completion is also possible. In some implementations, because operations may be handled asynchronously from the moment they are received by a server, a flush operand may also be used to ensure that the write operation that completes a series of write operations is actually the last operation in the series to be seen by the buffer (as this is the operation that causes the buffer state to change). In some implementations, information in a write request (e.g., the use of HTTP range headers or HTTP extension headers) makes it possible for the buffer to track and detect when all the data that is intended to be written has been written. Implicit detection of write completion is possible under a variety of circumstances, including where the amount of data to be written is known (e.g., indicated in one or more write requests), where the number of write requests anticipated is known (e.g., indicating that a request is number X out of a total of Y), where the buffer space is fully used, or where a write request has not been received within a preset window of time.

A buffer read request is a read request that specifies a buffer resource as the source of the data transfer. If the read operation would read outside the buffer, the request is denied. Buffer read requests received after a write request are blocked (queued) while write operations are in progress. Read requests received before a write request are processed without this protection. The results of a read followed by a write affecting the region of the buffer being read are indeterminate. It is the responsibility of the client that is going to follow read requests with write requests of the same region to either use a more appropriate buffer or to synchronize the operations, for example, by waiting until reads complete before issuing a conflicting write. Detection of read completion may be explicit or implicit using the same techniques suggested with regard to detection of write completion, including, e.g., enumeration of read requests or anticipating that reads are completed when the entire buffer has been read. These techniques for detecting completion of read or write requests can be used with any of the semantic models described here.

### WRITE BUFFER

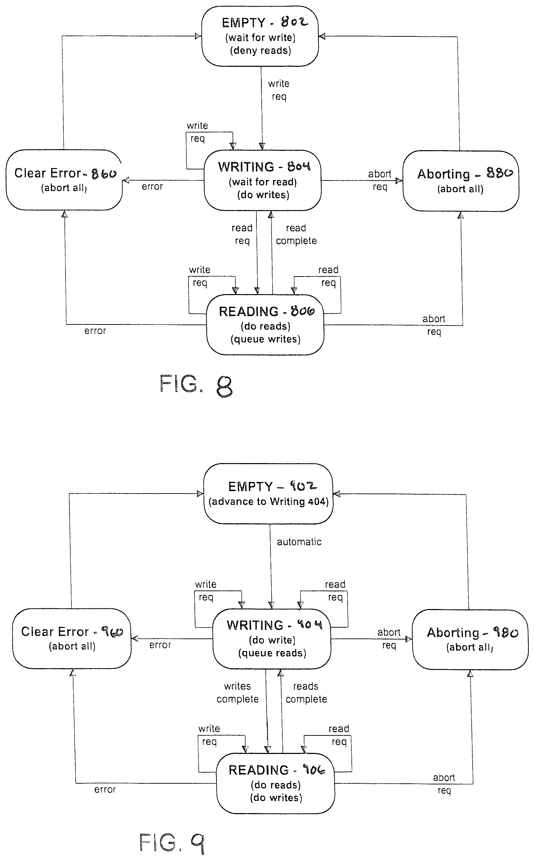

FIG. 8 represents the state transitions of a write buffer. Upon creation, the buffer is in empty state 802 where it waits for a request to write data into the buffer (a buffer write request) and denies all requests to read data from the buffer (a buffer read request). Upon receiving a buffer write request, the buffer transitions into writing state 804 where it performs all write requests received until it receives a read request. When the buffer receives a read request it transitions to reading state 806 where it processes all buffer read requests until the read requests complete or a buffer abort request is received. While in reading state 806, the write buffer queues all write requests. When reads complete the buffer transitions back to writing state 804 and resumes processing write requests. If an error occurs in writing state 804 or reading state 806 the buffer transitions to clear error state 860 and aborts all operations queued or in progress that can be efficiently aborted. The buffer then returns to empty state 802. Upon receiving an abort request, the buffer transitions to aborting state 880 and aborts all operations queued or in progress that can be efficiently aborted. The buffer then returns to empty state 802.

A buffer write request is a write request that specifies the buffer resource as the destination of the data transfer. If the write operation would overflow the buffer, the request is denied. Write requests to a write buffer are blocked (queued) while a read operation is in progress.

A buffer read request is a read request that specifies a buffer resource as the source of the data transfer. If the read operation would read outside the buffer, the request is denied. When multiple read requests are used with a write buffer, the buffer benefits from the use of an operation indicating that the read requests have completed.

The results of a write followed by a read of the region of the buffer being written are indeterminate. It is the responsibility of the client that is going to follow write requests with read requests of the same region to either use a more appropriate buffer or to synchronize the operations, for example, by waiting until writes complete before issuing a conflicting read.

### READ/WRITE BUFFER

FIG. 9 represents the state transitions of a read/write buffer. Upon creation, the buffer is in writing state 904. If the buffer is in empty state 902 it advances automatically to writing state 904. In writing state 904 the read/write buffer performs all write requests received until all writes have completed. The buffer may receive an explicit 'write complete' indication or it may determine completion implicitly. Read requests received while in writing state 904 are queued. Upon receiving the last write while in writing state 404 the buffer transitions into reading state 906. In reading state 906 the buffer performs all queued and subsequently received read requests until all reads have completed. The buffer may receive an explicit 'read complete' indication or it may determine completion implicitly. The reads are not necessarily performed in any particular order, though reads received before the 'reads complete' indication are completed and reads received after the 'reads complete' indication are queued. If the implementation binds the 'reads complete' indication to a read request, the read request and 'read complete' indication are processed as though they were received in separate messages with the read request arriving first. Upon receiving the 'reads complete' indication the buffer transitions back into writing state 904.

If an error occurs in writing state 904 or reading state 906 the buffer transitions to clear error state 960 and aborts all operations queued or in progress that can be efficiently aborted. The buffer then returns to empty state 902. Upon receiving an abort request, the buffer transitions to aborting state 980 and aborts all operations queued or in progress that can be efficiently aborted. The buffer then returns to empty state 902.

While the read/write buffer is in reading state 906, it will also continue to perform any write requests it receives, but it will ignore any 'writes complete' indication. That is, the 'writes complete' indication is not queued or recorded. A write request made while the buffer is in reading state 906 may make indeterminate the results of a read request of the region of the buffer being written. It is the responsibility of the client that is going to use write requests without a read complete notification to either use a more appropriate buffer or to synchronize the operations, for example, by waiting until reads complete before issuing a conflicting write.

### DOUBLE BUFFER

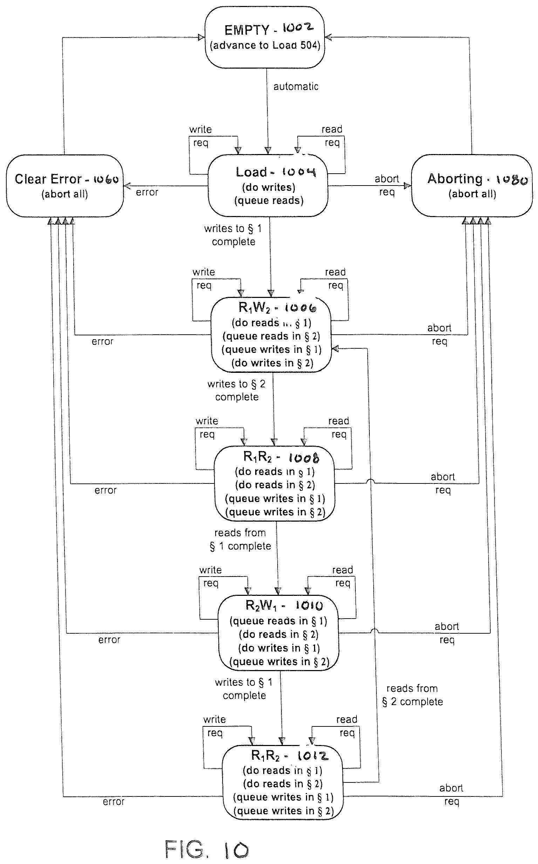

FIG. 10 represents the state transitions of an example of a double buffer. The resource managed by a double buffer is split into two sections. These sections can be regions of a single resource or two distinct resources. Upon creation, the double buffer is in load state 1004. If the buffer is in empty state 1002 it advances automatically to load state 1004. In load state 1004 the double buffer performs all write requests received until it receives a write complete notification, or implicitly determines write completion, for one of the two sections. For convenience, this is section 1 and the section still being written to is section 2. When the double buffer receives a write complete notification for section 1 in load state 1004, it transitions to read-write state 1006. In read-write state 1006 the double buffer processes all read requests for section 1 and all write requests for section 2. Read requests for section 2 and write requests for section 1 are queued. When the double buffer receives a write complete notification for section 2 in read-write state 1006, it transitions to read-read state 1008. In read-read state 1008 the double buffer processes all read requests and queues all write requests. When the double buffer receives a read complete notification for section 1 in read-read state 1008, it transitions to read-write state 1010. Read-write state 1010 is the same as read-write state 1006, operating on opposite sections. When the double buffer receives a write complete notification for section 2 in read-write state 1010, it transitions to read-read state 1012. Read-read state 1012 is the same as read-read state 1008 except that it is the receipt of a read complete notification for section 2 that advances the buffer to the next state. When the double buffer receives a read complete notification for section 2 in read-read state 1012, it transitions to read-write state 1006.

The handling of reads, writes, errors, and aborts (1060, 1080) is the same as with the read/write buffer (960, 980). The client is responsible for coordinating access via the completion notifications.

### N-BUFFER

An N-Buffer is the same as a double buffer but with support for N sections.

### FIFO BUFFER

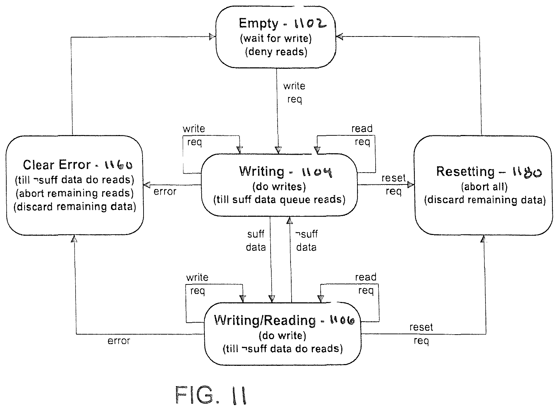

Referring to FIG. 11, a first in, first out (FIFO) buffer can use semantic constraints to simplify addressing. All write requests to a FIFO buffer pick up from where the previous write request left off. All read requests from a FIFO buffer pick up from where the previous read request left off. A write to a FIFO buffer resource has the effect of writing data to the portion of the buffer immediately following the current valid contents of the buffer. A read from a FIFO buffer resource has the effect of transferring data from the beginning of the buffer and then effectively shifting the remaining valid contents of the buffer forward by the same amount. This shift can be achieved, for example, by updating the buffer's logical to physical address map.

A write to a FIFO buffer for which the buffer would have enough space if the buffer were empty does not need to be rejected. In one implementation, a write that would cause the buffer to overflow because of previously written valid contents, has the effect of first shifting the valid contents of the buffer forward by the amount of the overflow before performing the write. That is, the space can be created by discarding some of the valid data at the front of the buffer. A write to a FIFO buffer that is larger than the buffer is either rejected or truncated, depending on the implementation.

FIG. 11 represents the state transitions of a FIFO buffer. Upon creation, the buffer is in empty state 1102 where it waits for a request to write data into the buffer (a buffer write request) and denies all requests to read data from the buffer (a buffer read request). Upon receiving a buffer write request, the buffer transitions into writing state 1104 where it performs all write requests received. When the buffer receives a read request for which it has sufficient data, it transitions to writing-reading state 1106 where it processes all read requests for as long as there is sufficient data or until a buffer abort request is received. While in writing-reading state 1106, the write buffer continues to process all write requests. If a read request arrives before the buffer has sufficient data to satisfy the request, the request is queued. If the buffer is in writing-reading state 1106, it transitions back to writing state 1104 and queues read requests until there is sufficient data or a until a buffer abort request is received. If an error occurs in writing state 1104 or writing-reading state 1106 the buffer transitions to clear error state 1160 and aborts all operations queued or in progress that can be efficiently aborted. The buffer then returns to empty state 1102. Upon receiving an abort request, the buffer transitions to aborting state 1180 and aborts all operations queued or in progress that can be efficiently aborted. The buffer then returns to empty state 1102.

In some examples that follow the FIFO approach described above, instead of using 2^{∗}Size in a double buffer to get concurrency between reads and writes, the FIFO only requires (1+F)^{∗}Size, where F is less than 1 and determined by the expected latency of filling and emptying the buffer.

As described, in some exampled, buffers are allocated as needed for particular transfers (i.e., for the transfer of a particular unit of content, such as for a particular movie). Allocation may entail creation of buffers or selection from a pool of available buffers. When the buffer is no longer needed, it is released - either destroying the buffer or restoring it to an available state. The size and type of buffer used in each transfer is determined by the needs of the transaction. The use of a buffer can be mandated by a requesting client or by a coordinator, e.g., in a manner transparent to the client.

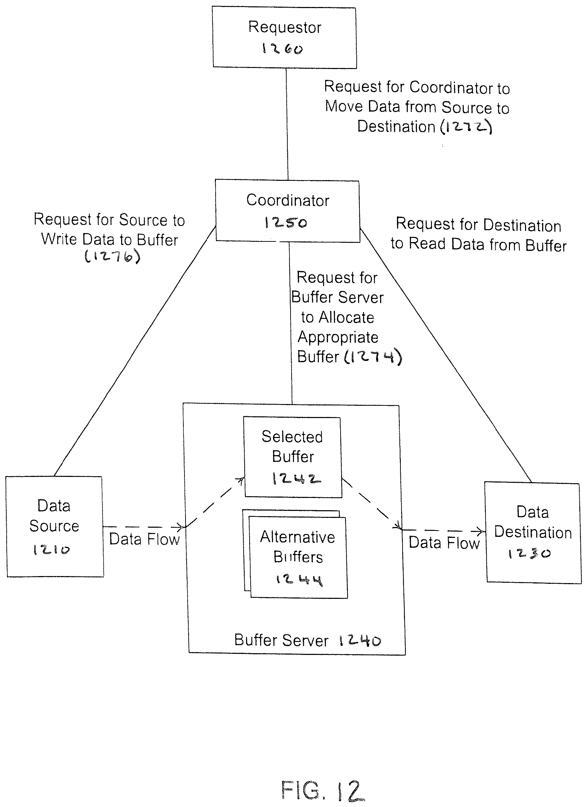

Referring to FIG 12, in a particular example, a requestor 1260 sends a data transfer request 1272 to a coordinator 1250. The request 1272 is for the coordinator 1250 to coordinate a move of data from a source 1210 to a destination 1230. The coordinator 1250 analyzes the request and, in this example, determines that a specific type and location of a buffer is appropriate for the transfer. The coordinator 1250 sends a request 1274 to a buffer server 1240. The request 1274 is for the buffer server 1240 to allocate an appropriate buffer of the size and type determined to be appropriate for the transfer. In some cases the buffer server 1240 may allocate the buffer 1242 from among an existing set of alternative buffers 1244. In some cases the buffer server 1240 may allocate the buffer 1242 by allocating space and assigning semantic constraints to the space, creating a new buffer. The coordinator 1250 then affects the transfer of the data from the source 1210 to the destination 1230 via the buffer 1242. For example, the coordinator 1250 sends a request 1276 to the source 1210 for the source to write data to the buffer. The coordinator 1250 also sends a request 1278 to the destination 1230 for the destination to read data from the buffer. Note that the semantics of the buffer may coordinate the writes and reads involving the buffer, for example, blocking the reads until the appropriate data is available as a result of corresponding writes. When the transaction is complete the coordinator 1250 may send the buffer server 1240 a request to release the buffer.

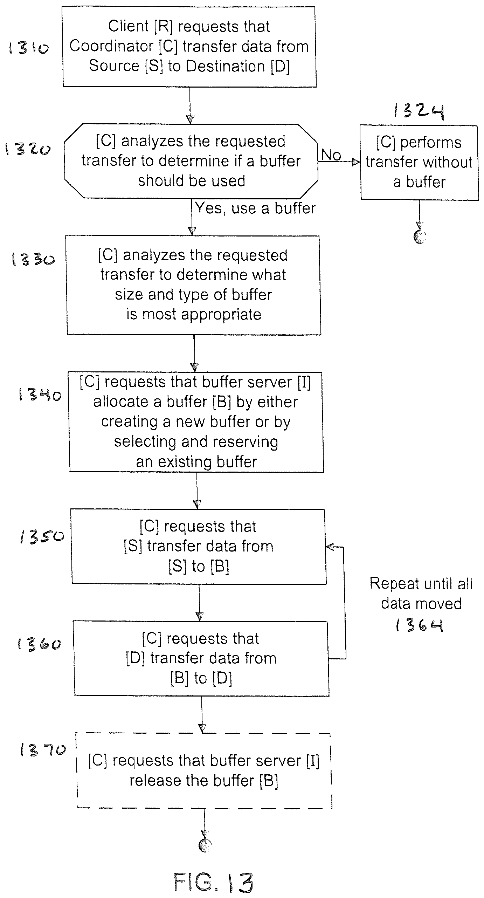

Referring to FIG 13, a flowchart represents this type of operation. A requestor [R] requests that a coordinator [C] transfer data from a source [S] to a destination [D] (1310). The coordinator then analyzes the requested transfer to determine if a buffer should be used (1320). If no buffer is needed, the coordinator performs the transfer without a buffer (1324). If a buffer should be used, the coordinator analyzes the requested transfer to determine what size and type of buffer is most appropriate (1330). The coordinator then requests that the intermediary buffer server [I] allocate a buffer [B] (1340). The buffer server may allocate the buffer by either creating a new buffer or by selecting and reserving an existing buffer. The coordinator then requests that the source transfer data from the source to the buffer (1350). With the data now in the buffer, the coordinator then requests that the data destination transfer the data from the buffer to the destination (1360). The buffer may be smaller than the total size of the data to be moved. The coordinator may repeat (1364) the process of moving data from the source to the buffer (1350) and from the buffer to the destination (1360) until all of the data is moved. In some cases the coordinator then requests that the buffer server release the buffer (1370).

In some examples, the client requests allocation of the buffer and then treats it as a storage resource for future transactions. For example, the client may expect that there will be several destinations for the data and wishes to use a buffer as a staging area. The source is read into the buffer once and then the various destinations receive the data from the buffer, reducing load on the source and on network connections to the source.

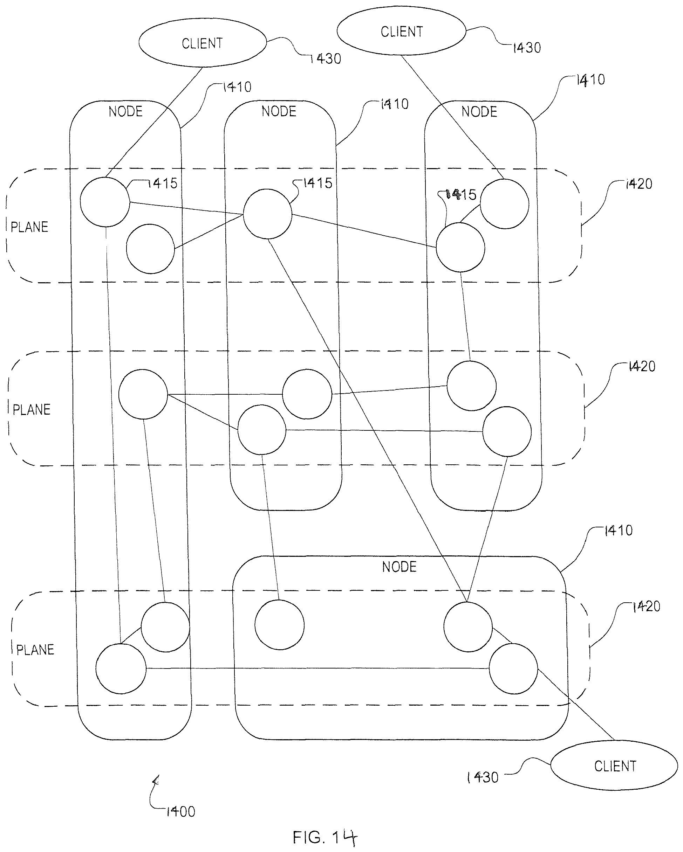

FIGS. 1-13 described above, describe aspects of a system for content storage and delivery. Referring to FIG. 14, in some embodiments, such a system 1400 is hosted on a large number of distributed computing platforms 1410, which may be referred to as "nodes," coupled by communication networks (not illustrated in FIG. 14). For example, large numbers of computers are interconnected by one or more data networks, such as local or wide area Internet Protocol (IP) based data networks. In order to avoid limitations, such as communication bottlenecks, potential deadlock, etc. as the number of nodes grows, for example, to hundreds or thousands of nodes or more, an approach to coordinating operation of the nodes involves partitioning the components 1415 that implement the various functions performed and/or services provides into a number of different groups 1420. These groups are referred to below as "independently coordinated domains" or "planes" without intending to imply any particular characteristics of these groups through the use these terms.

Each plane 1420 communicates with one or more other planes, and at least some of the planes communicate with external clients 1430 of the system. In some embodiments the planes are arranged as a linear sequence with each plane communicating with neighboring planes in the sequence, but in general, each plane is not limited to communicate with particular other planes.

In some examples, communication between planes is based on a request-acknowledgment approach in which a request message is passed from one plane to another and some time later an acknowledgment and/or an indication that a requested action has completed is passed back.

As an example of components 1415 of the content storage and access system that may be grouped into a plane are components that together handle allocation of content storage resources for particular content items that are stored in the system. For example, these components may be responsible for determining the particular disk drives that house a digital representation of a movie that can be later accessed for presentation to viewers. The allocation function requires a degree of coordination across different nodes, for example, to avoid a situation in which different nodes each receive a different new content item but allocate the same storage resources to the different new items in a conflicting or otherwise undesirable manner.

As another example of components 1415 that may be grouped into a plane 1420 are components that operate at a time scale that is substantially different than other of the planes. For example, components responsible for a low-level transfer of data from node to node of the system operate at a time scale that is substantially faster than components responsible for allocation of resources for new content items being added to the system. Such components may also have very different coordination requirements between nodes than other planes, for example, using communication protocols between two or more nodes to maintain a desired degree of consistency over the entire plane without requiring centralized coordination across all nodes hosting the plane.

In general, each plane 1420 includes components 1415 that are hosted on a number of different nodes 1410 of the system, and for each plane an independent approach to maintaining a particular consistency model across its components for resources controlled within that plane is implemented. For example, in a plane in which components allocate shared resources, the components of the plane operate according to the consistency model for that plane that guarantees resources are not inadvertently allocated in a conflicting manner.

Communication between planes is distributed, for example, with separate communication paths existing between planes (i.e., between components of the planes) at any of the nodes of the system. In general, the grouping of components into planes is such that interactions between planes do not require substantial synchronization or other types of coordination between planes. For example, the consistency model provided by the external interfaces of a control plane may be substantially weaker than the consistency model used for internal functions within the plane.

In some embodiments, the consistency model that is provided between planes provides no guarantees regarding the ordering of execution of requests made at different of its communication ports. For example, if two requests are made at different nodes in one order, there is no guarantee that the requests will be handled in that order, and even if two requests are made in a certain order at one node, the order of handling the requests is not guaranteed. Using such a weak consistency model, a plane that provides a service to other planes is free to implement its internal operations without having to coordinate its components according to a constrained consistency model. In other embodiments, a control plane may provide a somewhat more constrained consistency model through its external interfaces, for example, maintaining ordering at one node but not across different nodes. In general, the internal consistency model for a plane is more constrained than that provided through its external interfaces.

With such a relatively weak synchronization between planes, the implementation of internal consistency can be appropriate to the functions performed within the plane, and can provide desirable scaling properties. For example, in the case of a resource allocation function, at one extreme, allocation information is centralized at a single node, and other nodes communication with the central node for all requests. Such an implementation may provide simplicity, but may have undesirable communication characteristics, for example, resulting in undesirably large amounts of communication with the central node or resulting in undesirable latency of the handling of requests by the central node. In other implementations, the allocation information is distributed to avoid much of the internode communication. For example, components at different nodes may communicate to pre-allocate a portion of the shared resource to be used to handle requests made through an external interface to the plane at a node, and may communicate relatively slowly and/or with relatively little data to maintain a balance of the amounts of free resources that are preallocated at each node. Note, however, that the implementation of the internal consistency of allocation information is independent of the external consistency for the plane. For example, a request made first at one node may not get resources that are provided in response to a later request made at another node. Because the plane does not guarantee the ordering of the external requests, there are in general more and preferable alternative implementations of the internal consistency to achieve the desired functions implemented by the components of the plane.

In embodiments in which limited or no guarantees are made for consistency of inter-plane requests, each plane is responsible for implementing its own consistency. For example, if a first plane requires that a first request of a second plane is completely serviced before a second request made at the same or a different node, the first plane must wait to determine that the request has been completed, for example, by receiving a confirmation from the second plane, before issuing the second request.

As introduced above, in some embodiments, the separation of functions into different planes is based at least in part on the different time scales of operation of the functions within that plane. For example, in a plane that executes at a relatively slow time scale and with relatively weak latency requirements, a coordination approach that results in high latency may be acceptable. For example, a token passing or locking approach in which only a single node is enabled to access shared resources at any one time within the plane may be an example of such a coordination approach. On the other hand, a data transfer function at another plane may not be able to tolerate the latency that could be introduced by such a coordination approach. By separating the functions into different planes, the approach to maintaining consistency within each plane may be tailored to the time scale of operations (e.g., the latency requirements) of functions in each of the planes.

In some embodiments, components at different planes at a node can be segregated into different processing units at the node. Examples of such processing units are operating system processes, lightweight processes, and threads. For example, by having each process belong to only a single plane, interactions between planes, such as blocking interactions, are avoided or minimized. In some embodiments, scheduling and/or prioritization approaches to executing the processing units can be matched to the requirements of the different planes. For example, certain planes may have higher priority than other planes, may preempt execution of other planes, and may have different durations of time slices than other planes in a time sharing approach.

In some embodiments, communication within a plane may use different communication resources than communication between planes. For example, a separate network may be used for passing data between components in a data transfer plane, with a different network being used for communication at other planes and between planes. Similarly, different types of communication approaches may be used at different planes. For example, packet-switched data communication may be used at certain planes, with dedicated point-to-point communication may be used at other planes, such as at a data transfer plane.

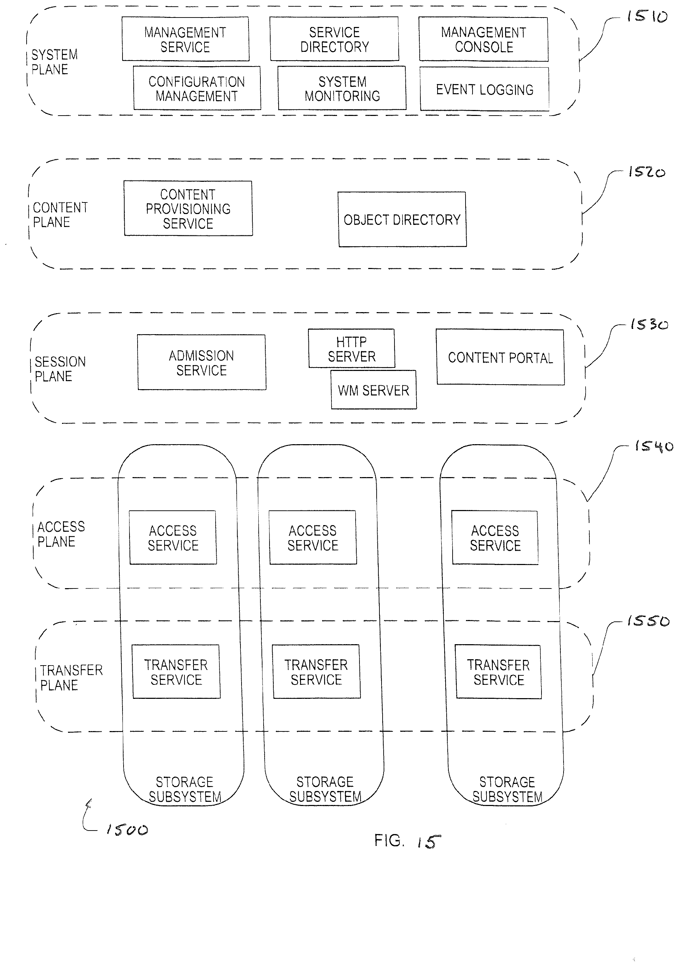

Referring to FIG. 15, an example of a content storage and delivery system 1500 uses five independent coordinated domains, or planes 1510-1550. Each plane supports a distributed set of related and cooperating functionality that can operate under normal conditions without relying on strict coordination between planes. There is a mapping of state and context between planes and a transfer of messages between planes. A removal or reduction of inter-plane coordination requirements helps improve performance and scalability in the system.

The five planes illustrated in FIG. 15 include the following.
- The System plane 1510 components provide overall visibility and management of the entire system; the System plane has a view of the entire system
- The Content plane 1520 components organize and manage how content is stored on the system
- The Session plane 1530 components initiate sessions, terminate sessions, allocate resources needed to support sessions, and generally manage sessions
- The Access plane 1540 components request data transfers from storage
- The Transfer plane 1550 components perform the data transfers

The most stringent real-time performance requirements are in the access 1540 and transfer 1550 planes of the system shown in FIG. 15. The other three planes, in general, have less stringent performance requirements and can be optimized according to factors other than performance, for example, ease of implementation, cost of equipment, richness of features, or ease of extensibility. As introduced above, each plane is itself a distributed systems environment, and can be thought of as existing across the entire system, though not necessarily uniformly distributed across each and every node of the system.

In this example application, the system plane 1510 has overall visibility and management of the entire system. The system plane includes configuration management, system control, system monitoring, and event/status logging functions. There are no (or relatively weak) real-time performance requirements for operations that are performed in the system plane. In some implementations, all operations in the system plane are performed on best effort basis, and can be implemented in a manner that does not compromise real-time requirements of operations in other planes. Components of the system plane may provide external interfaces for the system, for example, for management clients to access status information for the system.

Configuration management, one function of the system plane, maintains an overall connectivity map of all components in the system, a complete topology down to a level of detail of individual referenceable or replaceable components, e.g., disk drives or motherboards. The configuration management function maintains information about the functioning of each component in the system, such as health and performance monitoring, e.g., disk performance with regard to nominal parameters. Configuration information is updated dynamically during system operation to reflect the current state of the system as changes occur. Note that configuration information available within the system plane may be slightly out of sync with the true state of the system, temporarily. However, the implementation logic within the system plan is implemented so that this does not present a problem for operations across of the system. For example, each operation is responsible for reconciliation if a true state of the system causes the operation to fail based on the state within the plane.

Configuration information is used by the content plane to determine how to allocate content most effectively. Configuration information and current system state is used by the session plane to determine how to allocate system resources to a session. Within the system plane, configuration information is used by system management and control components. For example, if a particular disk is beginning to show signs of possible failure, then maintenance for that disk can be scheduled, and content and load can be shed from that disk. Another example arises when a system is operating normally, but is beginning to reach an operational threshold, e.g., low remaining storage capacity. The amount and type of information retained about each component is determined by the requirements of other components of the system. Many of the functions and operations in the system plane are driven by system management requirements and specific application use requirements.

The content plane 1520 provides overall management of content in the entire system. The content plane includes a content provisioning function and an object directory for maintaining the results of provisioning. There are no strict real-time performance requirements for operations that are performed in the content plane; all operations are best effort, and can be implemented in a manner not to compromise real-time requirements of operations in the other planes.

The content provisioning function is responsible for the allocation and assignment of content to storage. How content is provisioned is determined in order to optimize operational objectives of using the content in the system. Such objectives include accessibility (popularity), resilience, and integrity. Additional objectives can be included as well (e.g., security, topological affinity, or geographic affinity) and can also depend on characteristics of a particular system installation. Further, content may have a lifecycle model that describes how provisioning objectives change over time. Content provisioning may follow a predetermined schema, select one of many predetermined schema according to parameters for a schema selection scheme, or using an automated process approximating an optimal arrangement.

In some embodiments, a collection of schema is used to provision content during normal operation of the system. An individual piece of content has an operational objective, such as particular values of accessibility, resilience, and integrity. A schema is selected to provision that content to meet that operational objective. The content plane is responsible for this processing.

The session plane 1530 embodies and supports one or more media access regimes. Examples of media access regimes include HTTP access, Microsoft® Windows Media Server™, Adobe® Flash Media® Server, RealNetworks® Helix DNA™ server, and other such access regimes. Session plane components manage sessions established for access regimes and manage the resources needed to service those sessions. The major functional components in the session plane include access regime server (e.g., media server), admission (including session management), resource reservation (and management), and object access and transfer. The session plane includes interfaces to external clients of the system, for example, that request specific content from the system.

The session plane bridges real-time and non-real-time operations in the overall system. There are no strict real-time performance requirements for operations other than access and transfer related operations. Session plane operations generally have soft real-time performance requirements, meaning that such operations have defined performance objectives but without strict real-time constraints. There are no real-time dependencies on non-real-time operations in other planes. Strict real-time dependencies are localized and decoupled within the session plane, meaning that session coordination requirements are localized and bounded (e.g., coordination within a session but not across sessions). Session plane operations can rely on the strict real-time performance characteristics of access and transfer plane operations.

An access regime requests the creation of a session from an admission component. Generally, the access regime does this due to an external request to the regime (e.g., a remote Windows Media Client initiates a stream with a Windows Media Server Access Regime). The admission component is responsible for determining whether there are sufficient system resources to admit a requested session. If sufficient resources are available, then the session is created and resources needed for the session are reserved for the duration or tenure of the session; if there are insufficient resources, the session creation request is denied. Finally, when the session is no longer needed or upon request, the session is terminated, and reserved resources are released.

Each access regime may have a slightly different notion of session. For example, a particular access regime may not require that resources be reserved for the entire duration of the session, in which case, how and/or when resource reservation occurs may differ from the basic mechanism. Admission relies, in part, on the decisions made during content provisioning and system configuration. In essence, system configuration, content provisioning, and admission, though decoupled and operating in different temporal planes, are nonetheless cooperative.

The system is configured to support an expected nominal workload (i.e., a model workload). During ongoing content provisioning, content is provisioned as requested on the system. If provisioning is successful overall, then the overall provisioning will support a prescriptive workload that is roughly comparable to or within the bounds of the expected nominal workload. When each new session is requested, its resource requirements have already been factored into the system configuration and provisioning. Therefore, deciding whether a new session can be supported is a quick matter of looking up whether the new session fits into the prescriptive workload.

If a new session deviates from the prescriptive workload, but nonetheless can be supported, the session can be created, and other operations can be signaled to determine whether the system should be re-provisioned or reconfigured. If the new session would exceed the prescriptive workload, other operations can be signaled to determine whether the system should be re-provisioned, reconfigured, or upgraded.

The access and transfer planes provide the mechanisms by which data is moved into and out of storage. Access and transfer are separate planes but conceptually closely linked. A request made of the access plane results in the transfer of data in the transfer plane. In an example configuration, access and transfer bridge between access servers and storage servers. Storage servers operate largely within the temporal context of the transfer and access planes.

Components of the access plane 1540 and transfer plane 1550 each have significant real-time performance requirements. A relationship exists between the individual real-time requirements across session, access, and transfer planes, but the relationship is limited to an individual request. There are no ordering rules between requests - request order and transfer completion order are not preserved.

As an example of operation of the planes, a media server component in the session plane issues a request for a block of data to the data storage access component in the access plane 1540 optionally specifying a certain time (a deadline) by which the data is needed in order to satisfy its isochronous delivery requirements. To satisfy the request for the block of data, the data storage access component in the access plane makes a request to the storage subsystem to fetch the data, for example, from disk storage.

In some embodiments, a storage subsystem is a node in the system, which hosts both the access and transfer planes. The data is requested by a component in the storage subsystem that is in the access plane, and the request is accepted by a component of the storage subsystem in the transfer plane. The order of operation of the requests from the access plane need not be guaranteed by the transfer plane. A transfer component in the transfer plane then delivers the fetched data to the media server, which is part of the session plane. The media server component's deadline is across the entire chain of operations.

Complexity may arise when the number of outstanding requests increases, e.g., as the number of simultaneous sessions increases. Access delay (e.g., seek time of a disk) is significant with respect to each deadline and multiple transfers are subject to collision (e.g., because they are occurring over a network). In an example configuration, where there are 15,000 sessions, all with strict real-time requirements, requesting an aggregate of 37.5Gbs, among 4 storage and 4 access servers. The system needs to continue to operate and provide service at a predictable or prescribed level in the presence of failures of disks, servers, and other components. The multiple plane approach is designed to achieve this level of performance by reducing synchronization points (e.g., points where a process is blocked waiting for other processes to reach a certain state in adherence to a consistency model).

Explicitly separating access and transfer removes constraints on disk scheduling, buffer management, and data transfer, so that each of these can be optimized locally (e.g., within a single plane). The need for coordination within the access and transfer planes is generally reduced and managed by the decisions made during session admission, content provisioning, and system configuration. Functions within the access and transfer planes are decoupled from many of these decisions. The abstract workload and the provisioned workload provide a context of implicit coordination and synchronization. Thus, as long as the accesses and transfers are within the bounds prescribed in the provisioned workload, then explicit coordination can be largely avoided. Usually, no implicit coordination is needed between requests within a storage server or across storage servers. Eliminating such constraints removes a major barrier to scaling.

The approaches described above are applicable to other systems than content storage and delivery systems. For example, other distributed systems with one or more groups of management and coordination functions as well as one or more groups of time critical functions can be addresses using these approaches.

In general, the design approaches are manifested in the runtime implementation of the system, for example, in the processes and their interprocess communication requirements. In some implementation, separation into different planes is manifested in the system specification, but may not necessarily be represented explicitly in the runtime implementations. For example, a compilation (or other software building process) may take the specifications of distinct planes and combine them into specifications for operation of different nodes.

In some examples, some planes are implemented in software while other planes are implemented in hardware. For example, a fast time scale plane may be implemented according to a specification of the plane in hardware, while slower time scale planes may be implemented in software.

In general, the system elements and the functional operations described in this specification can be implemented in digital electronic circuitry, or in computer hardware, firmware, software, or in combinations of them. They can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps described above can be performed by one or more programmable processors executing a computer program to perform functions by operating on input data and generating output. Method steps can also be performed by, and apparatus of the invention can be implemented as, special purpose logic circuitry, e.g., an FPGA (field programmable gate array) or an ASIC (application-specific integrated circuit).

The system and all of the functional operations described in this specification can be implemented in digital electronic circuitry, or in computer hardware, firmware, software, or in combinations of them. The system can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the system can be performed by one or more programmable processors executing a computer program to perform functions of the system by operating on input data and generating output. Method steps can also be performed by, and apparatus of the system can be implemented as, special purpose logic circuitry, e.g., a field programmable gate array ("FPGA") or an application-specific integrated circuit ("ASIC").

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of nonvolatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

It is to be understood that the foregoing description is intended to illustrate and not to limit the scope of the invention, which is defined by the appended claims. Other embodiments may be within the scope of these appended claims.

## Claims

1. A method comprising:
receiving a data transfer request to transfer data between a plurality of nodes (110, 130, 140) included in a data network (120), the request including a parameter and an access operation to be executed in association with one or more elements of network-based storage resource(s) (150), wherein the parameter includes respective persistent fully-resolvable identifiers for the one or more elements of network-based storage resource(s), wherein each persistent fully-resolvable identifier comprises a uniform resource identifier "URI" which specifies a portion of the network-based storage resource, and wherein the data transfer request is specified in accordance with HTTP syntax or an extension thereof; and
processing the access operation in accordance with the parameter to effect the transfer of data between the nodes included in the data network.

2. The method of claim 1, wherein the data transfer request is received from a first node of the plurality of nodes and the processing of the access operation affects the data transfer between the first node and a second node of the plurality of nodes.

3. The method of claim 2, wherein:
the first node manages a first set of elements of the network-based storage resource(s) of the one or more elements of the network-based storage resource(s), one of the first set of elements of the network-based storage resource(s) is associated with a first persistent fully-resolvable identifier included in the parameter; and
the second node manages a second set of elements of the network-based storage resource(s) of the one or more elements of network-based storage resource(s), one of the second set of elements of the network-based storage resource(s) is associated with a second persistent fully-resolvable identifier included in the parameter.

4. The method of claim 3, wherein:
the one of the first set of elements of the network-based storage resource(s) associated with the first persistent fully-resolvable identifier, represents a data source of the data transfer request; and
the one of the second set of elements of the network-based storage resource(s) associated with the second persistent fully-resolvable identifier, represents a data destination of the data transfer request.

5. The method of claim 1, wherein the data transfer request is received from a first node of the plurality of nodes and the processing of the access operation affects a data transfer between a second node of the plurality of nodes and a third node of the plurality of nodes .

6. The method of claim 5, wherein the data transfer request is received by the second node on the data network.

7. The method of claim 5, wherein the data transfer request is received by a fourth node on the data network.

8. The method of claim 5, wherein:
the second node manages a first set of elements of the network-based storage resource(s) of the one or more elements of the storage resource(s), where one of the first set of elements of the network-based storage resource(s) is associated with a first persistent fully-resolvable identifier provided in the parameter; and
the third node manages a second set of elements of the network-based storage resource(s), where one of the second set of elements of the network-based storage resource(s) is associated with a second persistent fully-resolvable identifier provided in the parameter.

9. The method of claim 1, wherein the parameter of the access operation further includes information that specifies a synchronous or asynchronous nature of the access operation to be executed.

10. The method of claim 1, wherein the parameter of the access operation further includes information that specifies a time-based period within which the data transfer is to be affected.

11. A system (100) comprising:
a plurality of nodes (110, 130, 140) included in a data network (120);
a plurality of storage resources (150) that are managed by one or more of the plurality of nodes included in the data network, wherein each element of a storage resource of the plurality of storage resources is uniquely addressable by a persistent fully-resolvable identifier within the system, and wherein each persistent fully-resolvable identifier comprises a uniform resource identifier "URI" which specifies a portion of the storage resource; and
a network device operable to:
receive a data transfer request to transfer data between a plurality of nodes (110, 130, 140) included in a data network (120), the request including a parameter and an access operation to be executed in association with one or more elements of network-based storage resource(s), wherein the parameter includes respective persistent fully-resolvable identifiers for the one or more elements network-based storage resource(s), and wherein the data transfer request is specified in accordance with HTTP syntax or an extension thereof; and
process the access operation in accordance with the parameter to effect the transfer of data between the nodes included in the data network.

12. The system of claim 11, wherein each addressable element of a first storage resource of the plurality of storage resources is associated with a name that conforms to a direct addressing scheme that specifies a physical location on the first storage resource.

13. The system of claim 11, wherein each element of a first storage resource of the plurality of storage resources is associated with a name that conforms to an abstract addressing scheme that specifies a logical unit number of the first storage resource.

14. The system of claim 11, wherein each element of a first storage resource of the plurality of storage resources is associated with a name that conforms to an addressing scheme that uses a combination of direct and abstract addressing.

15. The system of claim 11, wherein elements of a first storage resource are associated with names that conform to a first addressing scheme, and elements of a second storage resource are associated with names that conform to a second, different addressing scheme.

## Patentansprüche

1. Verfahren, das Folgendes umfasst:
Empfangen einer Datenübertragungsanforderung, um Daten zwischen mehreren Knoten (110, 130, 140), die in einem Datennetz (120) enthalten sind, zu übertragen, wobei die Anforderung einen Parameter und einen Zugriffsvorgang, der in Verbindung mit einem oder mehreren Elementen von netzbasierten Speicherbetriebsmitteln (150) auszuführen ist, enthält, wobei der Parameter jeweilige persistente vollständig zerlegbare Kennungen für das eine oder die mehreren Elemente von netzbasierten Speicherbetriebsmitteln umfasst, wobei jede persistente vollständig zerlegbare Kennung eine einheitliche Betriebsmittelkennung "URI" umfasst, die einen Teil des netzbasierten Speicherbetriebsmittels spezifiziert, und wobei die Datenübertragungsanforderung in Übereinstimmung mit der HTTP-Syntax oder einer Erweiterung davon spezifiziert ist; und
Verarbeiten des Zugriffsvorgangs in Übereinstimmung mit dem Parameter, um die Übertragung von Daten zwischen den Knoten, die in dem Datennetz enthalten sind, zu bewirken.

2. Verfahren nach Anspruch 1, wobei die Datenübertragungsanforderung von einem ersten Knoten der mehreren Knoten empfangen wird und die Verarbeitung des Zugriffsvorgangs die Datenübertragung zwischen dem ersten Knoten und einem zweiten Knoten der mehreren Knoten bewirkt.

3. Verfahren nach Anspruch 2, wobei:
der erste Knoten eine erste Gruppe von Elementen der netzbasierten Speicherbetriebsmittel des einen oder der mehreren Elemente der netzbasierten Speicherbetriebsmittel managt, wobei eines der ersten Gruppe von Elementen der netzbasierten Speicherbetriebsmittel einer ersten persistenten vollständig zerlegbaren Kennung, die in dem Parameter enthalten ist, zugeordnet ist; und
der zweite Knoten eine zweite Gruppe von Elementen der netzbasierten Speicherbetriebsmittel des einen oder der mehreren Elemente von netzbasierten Speicherbetriebsmitteln managt, wobei eines der zweiten Gruppe von Elementen der netzbasierten Speicherbetriebsmittel einer zweiten persistenten vollständig zerlegbaren Kennung, die in dem Parameter enthalten ist, zugeordnet ist.

4. Verfahren nach Anspruch 3, wobei:
das eine der ersten Gruppe von Elementen der netzbasierten Speicherbetriebsmittel, das der ersten persistenten vollständig zerlegbaren Kennung zugeordnet ist, eine Datenquelle der Datenübertragungsanforderung repräsentiert; und
das eine der zweiten Gruppe von Elementen der netzbasierten Speicherbetriebsmittel, das der zweiten persistenten vollständig zerlegbaren Kennung zugeordnet ist, ein Datenziel der Datenübertragungsanforderung repräsentiert.

5. Verfahren nach Anspruch 1, wobei die Datenübertragungsanforderung von einem ersten Knoten der mehreren Knoten empfangen wird und die Verarbeitung des Zugriffsvorgangs eine Datenübertragung zwischen einem zweiten Knoten der mehreren Knoten und einem dritten Knoten der mehreren Knoten bewirkt.

6. Verfahren nach Anspruch 5, wobei die Datenübertragungsanforderung durch den zweiten Knoten auf dem Datennetz empfangen wird.

7. Verfahren nach Anspruch 5, wobei die Datenübertragungsanforderung durch einen vierten Knoten auf dem Datennetz empfangen wird.

8. Verfahren nach Anspruch 5, wobei:
der zweite Knoten eine erste Gruppe von Elementen der netzbasierten Speicherbetriebsmittel des einen oder der mehreren Elemente der Speicherbetriebsmittel managt, wobei eines der ersten Gruppe von Elementen der netzbasierten Speicherbetriebsmittel einer ersten persistenten vollständig zerlegbaren Kennung, die in dem Parameter vorgesehen ist, zugeordnet ist; und
der dritte Knoten eine zweite Gruppe von Elementen der netzbasierten Speicherbetriebsmittel managt, wobei eines der zweiten Gruppe von Elementen der netzbasierten Speicherbetriebsmittel einer zweiten persistenten vollständig zerlegbaren Kennung, die in dem Parameter vorgesehen ist, zugeordnet ist.

9. Verfahren nach Anspruch 1, wobei der Parameter des Zugriffsvorgangs ferner Informationen enthält, die eine synchrone oder asynchrone Natur des auszuführenden Zugriffsvorgangs spezifizieren.

10. Verfahren nach Anspruch 1, wobei der Parameter des Zugriffsvorgangs ferner Informationen enthält, die eine zeitbasierte Periode spezifizieren, innerhalb derer die Datenübertragung zu bewirken ist.

11. System (100), das Folgendes umfasst:
mehrere Knoten (110, 130, 140), die in einem Datennetz (120) enthalten sind;
mehrere Speicherbetriebsmittel (150), die durch einen oder mehrere der in dem Datennetz enthaltenen mehreren Knoten gemanagt werden, wobei jedes Element eines Speicherbetriebsmittels der mehreren Speicherbetriebsmittel durch eine persistente vollständig zerlegbare Kennung innerhalb des Systems eindeutig adressierbar ist und wobei jede persistente vollständig zerlegbare Kennung eine einheitliche Betriebsmittelkennung "URI" umfasst, die einen Teil des Speicherbetriebsmittels spezifiziert; und
eine Netzvorrichtung, die betreibbar ist zum:
Empfangen einer Datenübertragungsanforderung, um Daten zwischen mehreren Knoten (110, 130, 140), die in einem Datennetz (120) enthalten sind, zu übertragen, wobei die Anforderung einen Parameter und einen Zugriffsvorgang, der in Verbindung mit einem oder mehreren Elementen von netzbasierten Speicherbetriebsmitteln auszuführen ist, enthält, wobei der Parameter jeweilige persistente vollständig zerlegbare Kennungen für das eine oder die mehreren Elemente von netzbasierten Speicherbetriebsmitteln umfasst und wobei die Datenübertragungsanforderung in Übereinstimmung mit HTTP-Syntax oder einer Erweiterung davon spezifiziert ist; und
Verarbeiten des Zugriffsvorgangs in Übereinstimmung mit dem Parameter, um die Übertragung von Daten zwischen den Knoten, die in dem Datennetz enthalten sind, zu bewirken.

12. System nach Anspruch 11, wobei jedes adressierbare Element eines ersten Speicherbetriebsmittels der mehreren Speicherbetriebsmittel einem Namen zugeordnet ist, der mit einem direkten Adressierschema konform ist, das einen physikalischen Ort des ersten Speicherbetriebsmittels spezifiziert.

13. System nach Anspruch 11, wobei jedes Element eines ersten Speicherbetriebsmittels der mehreren Speicherbetriebsmittel einem Namen zugeordnet ist, der mit einem abstrakten Adressierschema konform ist, das eine logische Einheitennummer des ersten Speicherbetriebsmittels spezifiziert.

14. System nach Anspruch 11, wobei jedes Element eines ersten Speicherbetriebsmittels der mehreren Speicherbetriebsmittel einem Namen zugeordnet ist, der mit einem Adressierschema konform ist, das eine Kombination einer direkten und abstrakten Adressierung verwendet.

15. System nach Anspruch 11, wobei Elemente eines ersten Speicherbetriebsmittels Namen zugeordnet sind, die mit einem ersten Adressierschema konform sind, und Elemente eines zweiten Speicherbetriebsmittels Namen zugeordnet sind, die mit einem zweiten anderen Adressierschema konform sind.

## Revendications

1. Procédé comprenant :
la réception d'une requête de transfert de données pour transférer des données entre une pluralité de nœuds (110, 130, 140) compris dans un réseau de données (120), la requête comportant un paramètre et une opération d'accès destinée à être exécutée en association avec un ou plusieurs éléments d'une ou de ressources de stockage en réseau (150), le paramètre comportant des identifiants entièrement résolvables persistants respectifs pour les un ou plusieurs éléments d'une ou de ressources de stockage en réseau, chaque identifiant entièrement résolvable persistant comprenant un identifiant de ressource uniforme "URI" qui spécifie une partie de la ressource de stockage en réseau, et la requête de transfert de données étant spécifiée conformément à une syntaxe HTTP ou une extension de celle-ci ; et
le traitement de l'opération d'accès conformément au paramètre pour effectuer le transfert de données entre les nœuds compris dans le réseau de données.

2. Procédé selon la revendication 1, dans lequel
la requête de transfert de données est reçue en provenance d'un premier nœud de la pluralité de nœuds et le traitement de l'opération d'accès effectue le transfert de données entre le premier nœud et un deuxième nœud de la pluralité de nœuds.

3. Procédé selon la revendication 2, dans lequel :
le premier nœud gère un premier ensemble d'éléments de la ou des ressources de stockage en réseau des un ou plusieurs éléments de la ou des ressources de stockage en réseau, un du premier ensemble d'éléments de la ou des ressources de stockage en réseau étant associé à un premier identifiant entièrement résolvable persistant inclus dans le paramètre ; et
le deuxième nœud gère un second ensemble d'éléments de la ou des ressources de stockage en réseau des un ou plusieurs éléments de la ou des ressources de stockage en réseau, un du second ensemble d'éléments de la ou des ressources de stockage en réseau étant associé à un second identifiant entièrement résolvable persistant inclus dans le paramètre.

4. Procédé selon la revendication 3, dans lequel :
l'un du premier ensemble d'éléments de la ou des ressources de stockage en réseau associé au premier identifiant entièrement résolvable persistant représente une source de données de la requête de transfert de données ; et
l'un du second ensemble d'éléments de la ou des ressources de stockage en réseau associé au second identifiant entièrement résolvable persistant représente une destination de données de la requête de transfert de données.

5. Procédé selon la revendication 1, dans lequel la requête de transfert de données est reçue en provenance d'un premier nœud de la pluralité de nœuds et le traitement de l'opération d'accès affecte un transfert de données entre un deuxième nœud de la pluralité de nœuds et un troisième nœud de la pluralité de nœuds.

6. Procédé selon la revendication 5, dans lequel la requête de transfert de données est reçue par le deuxième nœud sur le réseau de données.

7. Procédé selon la revendication 5, dans lequel la requête de transfert de données est reçue par un quatrième nœud sur le réseau de données.

8. Procédé selon la revendication 5, dans lequel :
le deuxième nœud gère un premier ensemble d'éléments de la ou des ressources de stockage en réseau des un ou plusieurs éléments de la ou des ressources de stockage, un du premier ensemble d'éléments de la ou des ressources de stockage en réseau étant associé à un premier identifiant entièrement résolvable persistant fourni dans le paramètre ; et
le troisième nœud gère un second ensemble d'éléments de la des ressources de stockage en réseau, un du second ensemble d'éléments de la ou des ressources de stockage en réseau étant associé à un second identifiant entièrement résolvable persistant fourni dans le paramètre.

9. Procédé selon la revendication 1, dans lequel le paramètre de l'opération d'accès comporte en outre des informations qui spécifient une nature synchrone ou asynchrone de l'opération d'accès à exécuter.

10. Procédé selon la revendication 1, dans lequel le paramètre de l'opération d'accès comporte en outre des informations qui spécifient une période de temps durant laquelle le transfert de données doit être effectué.

11. Système (100) comprenant :
une pluralité de nœuds (110, 130, 140) compris dans un réseau de données (120) ;
une pluralité de ressources de stockage (150) qui sont gérées par un ou plusieurs de la pluralité de nœuds compris dans le réseau de données, dans lequel chaque élément d'une ressource de stockage de la pluralité de ressources de stockage est adressable de manière unique par un identifiant entièrement résolvable persistant dans le système, et dans lequel chaque identifiant entièrement résolvable persistant comprend un identifiant de ressource uniforme "URI" qui spécifie une partie de la ressource de stockage ; et
un dispositif de réseau exploitable pour :
recevoir une requête de transfert de données pour transférer des données entre une pluralité de nœuds (110, 130, 140) compris dans un réseau de données (120), la requête comportant un paramètre et une opération d'accès destinée à être exécutée en association avec un ou plusieurs éléments d'une ou de ressources de stockage en réseau, le paramètre comportant des identifiants entièrement résolvables persistants respectifs pour les un ou plusieurs éléments d'une ou de ressources de stockage en réseau, et la requête de transfert de données étant spécifiée conformément à une syntaxe HTTP ou une extension de celle-ci ; et
traiter l'opération d'accès conformément au paramètre pour effectuer le transfert de données entre les nœuds inclus dans le réseau de données.

12. Système selon la revendication 11, dans lequel chaque élément adressable d'une première ressource de stockage de la pluralité de ressources de stockage est associé à un nom qui est conforme à un mécanisme d'adressage direct qui spécifie un emplacement physique sur la première ressource de stockage.

13. Système selon la revendication 11, dans lequel chaque élément d'une première ressource de stockage de la pluralité de ressources de stockage est associé à un nom qui est conforme à un mécanisme d'adressage abstrait qui spécifie un numéro d'unité logique de la première ressource de stockage.

14. Système selon la revendication 11, dans lequel chaque élément d'une première ressource de stockage de la pluralité de ressources de stockage est associé à un nom qui est conforme à un mécanisme d'adressage qui utilise une combinaison d'adressage direct et d'adressage abstrait.

15. Système selon la revendication 11, dans lequel des éléments d'une première ressource de stockage sont associés à des noms qui sont conformes à un premier mécanisme d'adressage, et des éléments d'une seconde ressource de stockage sont associés à des noms qui sont conformes à un second mécanisme d'adressage différent.
